(19) Europäisches Patentamt
European Patent Office
Office européen des brevets

(11) Veröffentlichungsnummer : **0 506 703 B1**

(12) # EUROPÄISCHE PATENTSCHRIFT

(45) Veröffentlichungstag der Patentschrift :
**01.06.94 Patentblatt 94/22**

(51) Int. Cl.$^5$ : **C08F 212/04,** C08F 218/04, C08F 220/10, C09D 125/14

(21) Anmeldenummer : **91900247.7**

(22) Anmeldetag : **07.12.90**

(86) Internationale Anmeldenummer :
**PCT/EP90/02129**

(87) Internationale Veröffentlichungsnummer :
**WO 91/09888 11.07.91 Gazette 91/15**

(54) **LÖSLICHE VERNETZBARE COPOLYMERISATE AUF DER BASIS VON VINYLESTER-, VINYLAROMAT- UND ACRYLATMONOMEREN, VERFAHREN ZU IHRER HERSTELLUNG SOWIE IHRE VERWENDUNG IN BESCHICHTUNGSMITTELN.**

(30) Priorität : **22.12.89 DE 3942592**

(43) Veröffentlichungstag der Anmeldung :
**07.10.92 Patentblatt 92/41**

(45) Bekanntmachung des Hinweises auf die Patenterteilung :
**01.06.94 Patentblatt 94/22**

(84) Benannte Vertragsstaaten :
**AT BE CH DE DK ES FR GB IT LI NL SE**

(56) Entgegenhaltungen :
**EP-A- 0 349 818**
**EP-A- 0 355 408**
**DE-A- 2 032 647**
**DE-A- 3 710 431**

(73) Patentinhaber : **BASF Lacke + Farben AG**
**Glasuritstrasse 1**
**D-48165 Münster-Hiltrup (DE)**

(72) Erfinder : **JUNG, Werner, Alfons**
**Uhrwerkerstrasse 82**
**D-4715 Ascheberg (DE)**
Erfinder : **HOFFMANN, Peter**
**Grevener Strasse 389**
**D-4400 Münster (DE)**

(74) Vertreter : **Münch, Volker, Dr.**
**BASF Lacke + Farben AG**
**Patente/Lizenzen/Dokumentation**
**Postfach 61 23**
**D-48136 Münster (DE)**

**EP 0 506 703 B1**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft ein mittels Lösungspolymerisation herstellbares Copolymerisat (C) mit C-H-aciden Gruppen oder ethylenisch ungesättigten Doppelbindungen oder Epoxidgruppen oder cyclischen Anhydridgruppen oder Isocyanatgruppen als vernetzbare Gruppen auf der Basis von Vinylestern, Vinylaromaten, ethylenisch ungesättigten Monomeren mit mindestens einer funktionellen Gruppe und ggf. weiteren copolymerisierbaren Monomeren.

Gegenstand der vorliegenden Erfindung sind außerdem Verfahren zur Herstellung dieser löslichen, vernetzbaren Copolymerisate sowie ihre Verwendung.

In der US-PS 4,408,018 werden Acrylatcopolymere mit Acetoacetatgruppen beschrieben, die über die Michael-Addition in Gegenwart starker Basen mit, α,β-olefinisch ungesättigten Estern vernetzt werden können. Die EP-B-0160824 beschreibt Systeme mit dem gleichen Vernetzungsprinzip; verwendet werden allerdings andere Basen, die den Vorteil haben, daß dann der Lack weniger zur Vergilbung neigt. Die als Michael-Akzeptor einzusetzenden Komponenten werden über bekannte Reaktionen (Veresterung und Umesterung) von hydroxylgruppenhaltigen Acrylaten mit Komponenten, die neben einer veresterungs- oder umesterungsfähigen Gruppe eine α,β-olefinisch ungesättigte Gruppe tragen, erhalten.

Ähnliche Systeme werden in der EP-B-0161697 beschrieben. Hier wird die Reaktion von Malonestern mit α,β-ungesättigten Carbonylverbindungen zur Vernetzung herangezogen.

Die EP-A-0310 011 beschreibt ein System auf dem gleichen Vernetzungsprinzip, bei dem als CH-acide Komponente Ester der Methantricarbonsäure eingesetzt werden. Als Michael-Akzeptor wird ein Additionsprodukt aus einem glycidylgruppenhaltigen Acrylatcopolymer und Acrylsäure eingesetzt.

Ebenfalls auf Basis der Michael-Reaktion beruhen die Systeme der EP-A-0224158. Als Michael-Donatoren fungieren hier Methantricarbonsäureamide, die durch Addition von Isocyanaten an Malonester erhalten werden können.

Die EP-A-0203 296 beschreibt ebenfalls Polymere mit freien Acrylgruppen, die über die Michael-Addition von Polymeren mit blockierten Aminogruppen vernetzbar sind.

In der DE-OS-3710431 werden doppelbindungshaltige, vorvernetzte, nicht gelierte Acrylatcopolymere mit freien Acryloylgruppen beschrieben. Diese können über die Addition von Verbindungen, die mindestens zwei aktive Wasserstoffatome im Molekül aufweisen, vernetzt werden. Beispielsweise werden Verbindungen eingesetzt, die mindestens eine Gruppe mit aktiven Wasserstoffatomen oder mindestens ein aktives Wasserstoffatom und eine Gruppe mit aktiven Wasserstoffatomen enthalten.

Auch in der nicht vorveröffentlichten Patentanmeldung DE-38 32 958 werden derartige Systeme beschrieben, wobei als Verbindungen mit aktiven Wasserstoffatomen Verbindungen eingesetzt werden, die primäre Aminogruppen aufweisen. Um eine ausreichend lange Topfzeit zu gewährleisten, sind die primären Aminogruppen durch Kondensation mit Aldehyden oder Ketonen blockiert und werden erst in situ im Kontakt mit Luftfeuchtigkeit bei der Applikation freigesetzt.

In der US-PS-3,668,183 wird ebenfalls ein System aus einer Polyacetoacetat oder Polyacetamidkomponente, vernetzt mit blockierten (ketiminisierten oder aldiminisierten) Aminkomponenten unter Enaminbildung, beschrieben. Eine Verbesserung dieses Systems in Bezug auf Wasser-, Säure- und Bewitterungsbeständigkeit wird in der EP-B-0199 087 beschrieben. Alle oben genannten Systeme bauen auf Copolymerisaten auf, die außer Estern der Acrylsäure Vinylaromaten und ggf. Maleinsäureanhydrid oder Itaconsäureanhydrid enthalten.

Andere Vernetzungssysteme, die für die Aushärtung bei niedrigen Temperaturen geeignet sind und auf die Verwendung von Isocyanaten verzichten, sind in der EP-A-0316 874 genannt. Hier werden Systeme beschrieben, die über die Addition eines hydroxylgruppenhaltigen Polymeren an ein cyclisches Carbonsäureanhydrid eie Vernetzung ermöglichen. In einer zweiten Reaktion reagiert der so gebildete Halbester des Anhydrids mit Epoxidgruppen, um eine optimale Vernetzung sicherzustellen.

In der EP-A-0316 873 sind ähnliche Systeme beschrieben, bei denen außer den Hydroxyl-, Epoxid- und Anhydridgruppen enthaltenden Komponenten carboxylgruppenhaltige Komponenten im Lacksystem enthalten sind, die in einer weiteren Reaktion mit dem vorliegenden Epoxid reagieren können. Als Katalysatoren werden hier tertiäre Amine, vorzugsweise N-Methylimidazol eingesetzt.

Die EP-B-0134 691 beschreibt ein auf dem gleichen Vernetzungsprinzip beruhendes System aus Anhydridkomponente, Epoxikomponente und hydroxifunktionellen Polymer. Es können hier ebenfalls Carboxylgruppen in einer der Komponenten (OH- oder Anhydridkomponente) enthalten sein. Die US-PS-4 816 500 beschreibt ein System, das über die Reaktion eines anhydridfunktionellen Acrylates, das durch Copolymerisation von Itaconsäureanhydrid oder Maleinsäureanhydrid erhalten wurde, mit epoxidgruppenhaltigen Vernetzern umgesetzt wird. Als Katalysatoren werden Verbindungen mit tertiären Aminogruppen eingesetzt. Weiterhin sind Systeme bekannt, die als Vernetzungsreaktion die Reaktion von anhydridfunktionellen Polymeren mit Aminen unter der Einwirkung von Luftfeuchtigkeit ausnutzen. Die hohe Reaktivität der Systeme zwingt dazu,

die Amine über die Umsetzung mit Ketonen oder Aldehyden zu blockieren. Die DE-OS-3 370 066 beschreibt ein solches System, das als Komponente mit gegenüber Anhydriden reaktionsfähigem Wasserstoff zum Teil Hexahydropyrimidin- oder Tetrahydroimidazolgruppen enthält. Weiterhin können gemäß DE-OS 3 726 624 als Aminkomponente Oxazolane eingesetzt werden, die durch Umsetzung von Hydroxiaminen mit Ketonen erhalten werden.

Insbesondere ist es bei pigmentierten Systemen wichtig, daß die Pigmente gut benetzt werden. Dies erreicht man durch Modifikation der Copolymerisate mit Fettsäuren oder durch Modifikation der Copolymerisate mit dem Glycidylester von in α-Stellung verzweigten Carbonsäuren mit säurefunktionellen Monomeren. Im Klarlack führt die Modifikation mit langen aliphatischen Gruppen zu einem besseren Verlauf und einem Glanz, der dem von Lacken basierend auf Alkydharzen gleichkommt. Diese Umsetzung kann vor, während oder nach der Polymerisation vorgenommen werden. Nachteilig bei diesen Copolymerisaten ist der bei gegebener Viskosität recht geringe Anteil nichtflüchtiger Anteile. Dies wird durch den hohen, für eine ausreichende Härte der Filme notwendigen Styrolanteil hervorgerufen.

Eine weitere Möglichkeit ist die Copolymerisation von Vinylestern der in α-Stellung verzweigten aliphatischen Monocarbonsäuren mit 5 - 15 C-Atomen mit Acrylestern und Vinylaromaten. Aufgrund der stark unterschiedlichen Reaktivität der Vinylester-Monomeren im Vergleich zu den Vinylaromat- und den Acrylester-Monomeren treten bei diesen Copolymeren Schwierigkeiten bei der Polymerisation auf. Es gelingt in diesen Fällen schwer, einheitliche, d.h. statistisch homogen verteilte Copolymere zu erhalten.

Eine Möglichkeit zur Lösung dieses Problems ist das in der US-PS 4,039,734 beschriebene Verfahren zur Copolymerisation unterschiedlich reaktiver Monomerer, bei dem wenigstens ein Teil des reaktiven Monomers in solch einer Menge kontinuierlich zu der Reaktionsmischung hinzugegeben wird, daß das relative Monomerenverhältnis konstant bleibt. Die hierfür jeweils erforderliche Monomerenmenge wird mit Hilfe der frei werdenden Reaktionswärme ermittelt.

Bei dem in der DE-PS 20 32 647 beschriebenen Verfahren werden einheitliche Vinylester-, Vinylaromat- und Hydroxyacrylat-Copolymerisate entsprechend durch stufenweise Zugabe der einzelnen Monomeren erhalten. Bei diesem Verfahren wird die Gesamtmenge Vinylester zusammen mit 5 bis 15 Gew.-% der Gesamtmenge des Vinylaromaten und der Gesamtmenge der anderen hydroxifunktionellen Monomeren und ungesättigten Carbonsäuren vorgelegt. Die restliche Monomerenmenge wird dann entweder als Ganzes allmählich zugefügt oder aber so zudosiert, daß der Zulauf der OH- und COOH-Monomeren zeitlich länger dauert als der Vinylaromatenzulauf. Nachteilig bei diesem Verfahren sind der sehr hohe Restmonomerengehalt (d.h. die Menge nicht umgesetztes Ausgangsmonomer, ausgedrückt in Gew.-%, bezogen auf die ursprünglich eingesetzte Gesamtmenge dieses Monomers) von bis zu 40 Gew.-% an Vinylester bei Verwendung eines hohen Vinylaromatenanteils von bis zu 50 Gew.-% und die damit verbundenen Toxizitäts-Probleme. Weiterhin ungünstig im Hinblick auf die Lösemittelbelastung der Umgebung beim Trocknen der Lackfilme ist der durch die hohe Viskosität der Bindemittellösungen verursachte hohe Lösungsmittelanteil der Beschichtungsmittel. Zusätzlich besteht die Gefahr von Trübungserscheinungen bei Polymerlösungen mit höherem Festkörpergehalt, die nur durch Zugabe weiteren Lösungsmittels beseitigt werden können.

Auch die englischsprachige technische Information "VeoVa polymers LR-40 and LR-2041 for water-thinnable paints" der Firma Shell beschreibt derartige Vinylester, Vinylaromat und Hydroxialkylester enthaltende Copolymerisate, die allerdings ebenfalls die gerade oben genannten Nachteile aufweisen.

Weiterhin sind auch einige Massenpolymerisationsverfahren zur Herstellung von Vinylester enthaltenden Copolymerisaten bekannt, bei denen ebenfalls die Gesamtmenge des Vinylesters, ggf. mit einem Teil der Gesamtmenge der anderen Monomeren und ggf. Initiator erhitzt wird und dann die übrige Menge an Monomeren und Initiator allmählich zugesetzt wird (vgl. z.B. DE-PS-24 22 043 und DE-OS 26 15 101). Bei diesen Verfahren gelingt es zwar, den Vinylester vollständig einzubauen (Restmonomerengehalt < 10 Gew.-%), jedoch sind die so erhaltenen Copolymerisatlösungen nach dem Anlösen der Polymermasse trübe und für Lackformulierungen nicht geeignet.

Weiterhin sind aus der noch nicht veröffentlichten Patentanmeldung DE 38 23 005 hydroxylgruppenhaltige Copolymere bekannt, die durch Lösungspolymerisation von Vinylestern, Vinylaromaten, Hydroxialkylestern α,β-ungesättigter Säuren und ggf. weiteren ungesättigten Monomeren herstellbar sind, die einen niedrigen Restmonomerengehalt aufweisen und die zu klaren Copolymerlösungen führen.

Weiterhin sind aus der ebenfalls noch nicht veröffentlichten Patentanmeldung DE 38 27 587 aminogruppenhaltige Copolymerisate bekannt, die durch Lösungspolymerisation von Vinylestern, Vinylaromaten, Alkylestern α,β-ungesättigter Säuren und ggf. weiteren ungesättigten Monomeren sowie anschließende Aminolyse herstellbar sind und die ebenfalls einen niedrigen Restmonomerengehalt aufweisen und klare Lösungen geringer Viskosität ergeben.

Schließlich sind aus der ebenfalls nicht vorveröffentlichten Patentanmeldung DE 39 18 669 Carboxyl- und ggf. tert. aminogruppenhaltige Copolymerisate bekannt, die durch Copolymerisation von Carboxyl- und ggf.

tertiäre Aminogruppen enthaltenden Monomeren oder durch Addition von Säureanhydriden an OH-funktionelle Copolymerisate erhalten werden. Sie weisen ebenfalls einen geringen Restmonomerengehalt auf und bilden klare Copolymerlösungen.

Der Erfindung lag somit die Aufgabe zugrunde, vernetzbare Copolymerisate auf der Basis von Vinylester-, Vinylaromat und anderer copolymerisierbarer Monomerer zur Verfügung zu stellen, die auch bei einem hohen Vinylaromatenanteil von bis zu 50 Gew.-%, bezogen auf die Gesamtmonomerenmenge, einen niedrigen Restmonomerengehalt (< 10 Gew.-%, bezogen auf die Menge an eingesetztem Vinylestermonomer) an Vinylestermonomeren aufweisen und klare Lösungen ergeben. Die unter Verwendung dieser Copolymerisate hergestellten Beschichtungsmittel sollten bei einer für die Verarbeitung günstigen Viskosität von 16 - 20 s, gemessen im Auslaufbecher nach DIN 4, einen möglichst hohen Festkörpergehalt aufweisen und zu Überzügen mit guten technologischen Eigenschaften, insbesondere guter Härte, führen. Die Zusammensetzungen sollen gegebenenfalls bei Raumtemperatur oder leicht erhöhter Temperatur aushärten und damit beispielsweise in der Autoreparaturlackierung einsetzbar sein.

Schließlich sollte bei diesen Systemen das Qualitätsniveau auch ohne die Verwendung von Isocyanaten als Vernetzungskomponente dem Qualitätsniveau von Zweikomponenten-Polyurethanlacken bezüglich Reaktivität und Härteentwicklung nahekommen.

Überraschenderweise wird diese Aufgabe durch ein mittels Lösungspolymerisation herstellbares Copolymerisat (C) mit C-H-aciden Gruppen oder ethylenisch ungesättigten Doppelbindungen oder Epoxidgruppen oder cyclischen Anhydridgruppen oder Isocyanatgruppen als vernetzbare Gruppen gelöst, das aufgebaut ist auf der Basis von Vinylestern, Vinylaromaten, ethylenisch ungesättigten Monomeren mit mindestens einer funktionellen Gruppe und ggf. weiteren copolymerisierbaren Monomeren. Das Copolymerisat (C) ist dadurch gekennzeichnet, daß das Copolymerisat (C) einen Gehalt von im Mittel 1,25 bis 30 vernetzbaren Gruppen je Molekül und ein mittleres Molekulargewicht (Zahlenmittel) von 1500 bis 6000 aufweist und herstellbar ist, indem

(A) durch radikalische Lösungspolymerisation bei Temperaturen von 130 bis 200°C von

$a_1$) 5 bis 25 Gew.-% eines oder mehrerer Vinylester von Monocarbonsäuren,

$a_2$) 10 bis 50 Gew.-% eines oder mehrerer vinylaromatischer Kohlenwasserstoffe,

$a_3$) 10 bis 40 Gew.-% eines oder mehrerer ethylenisch ungesättigter Monomerer mit mindestens einer funktionellen Gruppe und

$a_4$) 0 bis 40 Gew.-% anderer ethylenisch ungesättigter, copolymerisierbarer Monomerer, wobei die Summe der Komponenten $a_1$ bis $a_4$ jeweils 100 Gew.-% ergibt,

ein Copolymerisat synthetisiert worden ist, indem

1.) mindestens 60 Gew.-% der Gesamtmenge der Komponente $a_1$ vorgelegt werden,

2.) die Komponenten $a_2$ bis $a_4$ und der ggf.
vorhandene Rest der Komponente $a_1$ innerhalb eines für alle Komponenten gleich langen Monomerenzugabezeitraumes so zudosiert werden, daß

i) die pro Zeiteinheit zugegebene Menge der Komponente $a_1$ innerhalb des Monomerenzugabezeitraumes konstant bleibt oder abnimmt,

ii) die pro Zeiteinheit zugegebene Menge der Komponenten $a_3$ und $a_4$ innerhalb des Monomerenzugabezeitraumes konstant bleibt und

iii) die innerhalb des ersten Drittels des Monomerenzugabezeitraumes zugegebene Menge der Komponente $a_2$ 15 bis 30 Gew.-% der Gesamtmenge der Komponente $a_2$, innerhalb des zweiten Drittels 25 bis 40 Gew.-% und innerhalb des letzten Drittels 35 bis 60 Gew.-% der Gesamtmenge der Komponente $a_2$ beträgt und

(B) das in Stufe A erhaltene Copolymerisat ggf. mit Verbindungen (V) umgesetzt worden ist, die eine gegenüber den Gruppen der Komponente $a_3$ reaktive Gruppe und mindestens eine C-H-acide Gruppe oder mindestens eine ethylenisch ungesättigte Doppelbindung oder mindestens eine Epoxidgruppe oder mindestens eine cyclische Anhydridgruppe oder mindestens eine Isocyanatgruppe als vernetzbare Gruppe enthalten,

wobei die vernetzbaren Gruppen dadurch in das Copolymerisat (C) eingeführt worden sind, daß als Komponente $a_3$ ethylenisch ungesättigte Monomere mit mindestens einer C-H-aciden Gruppe oder mindestens einer ethylenisch ungesättigten Doppelbindung oder mindestens einer Epoxidgruppe oder mindestens einer cyclischen Anhydridgruppe oder mindestens einer Isocyanatgruppe eingesetzt worden sind und/oder das in Stufe A erhaltene Copolymerisat mit Verbindungen (V) umgesetzt worden ist, die eine gegenüber den funktionellen Gruppen der Komponente $a_3$ reaktive Gruppe und mindestens eine C-H-acide Gruppe oder ethylenisch ungesättigte Doppelbindung oder Epoxidgruppe oder cyclische Anhydridgruppe oder Isocyanatgruppe als vernetzbare Gruppe enthalten.

Als Komponente $a_1$ werden Vinylester von Monocarbonsäuren, bevorzugt Vinylester von in $\alpha$-Stellung ver-

zweigten Monocarbonsäuren mit 5 bis 15 C-Atomen je Molekül eingesetzt. Die verzweigten Monocarbonsäuren können erhalten werden durch Umsetzen von Ameisensäure oder Kohlenmonoxid und Wasser mit Olefinen in Anwesenheit eines flüssigen, stark sauren Katalysators; die Olefine können Crackprodukte von paraffinischen Kohlenwasserstoffen, wie Mineralölfraktionen sein und können sowohl verzweigte wie geradkettige acyclische und/oder cycloaliphatische Olefine enthalten. Bei der Umsetzung solcher Olefine mit Ameisensäure bzw. mit Kohlenmonoxid und Wasser entsteht ein Gemisch aus Carbonsäuren, bei denen die Carboxylgruppen vorwiegend an einem quaternären Kohlenstoffatom sitzt. Andere olefinische Ausgangsstoffe sind z.B. Propylentrimer, Propylentetramer und Diisobutylen. Die Vinylester können auch auf an sich bekannte Weise aus den Säuren hergestellt werden, z.B. indem man die Säuren mit Acetylen reagieren läßt.

Besonders bevorzugt werden - wegen der guten Verfügbarkeit - Vinylester von gesättigten aliphatischen Monocarbonsäuren mit 9 - 11 C-Atomen, die am α-C-Atom verzweigt sind. Besonders bevorzugt ist außerdem der Vinylester der p-Tertiärbutyl-benzoesäure. Beispiele für weitere, geeignete Vinylester sind Vinylacetat und Vinylpropionat.

Die Menge der Komponenten $a_1$ beträgt 5 bis 25 Gew.-%, bevorzugt 10 bis 19 Gew.-%.

Die Komponente $a_2$ ist eine monovinylaromatische Verbindung. Vorzugsweise enthält sie 8 bis 9 Kohlenstoffatome je Molekül. Beispiele für geeignete Verbindungen sind Styrol, Vinyltoluole, α-Methylstyrol, Chlorstyrole, o-, m- oder p-Methylstyrol, 2,5 Di- methylstyrol, p-Methoxystyrol, p-tert.-Butylstyrol, p-Dimethylaminostyrol, p-Acetamidostyrol und m-Vinylphenol. Bevorzugt werden Vinyltoluole sowie insbesondere Styrol eingesetzt. Die Menge an Komponente $a_2$ beträgt 10 bis 50 Gew.-%, bevorzugt 20 bis 45 Gew.-%.

Bei den Monomeren der Komponente $a_3$ handelt es sich um in der Literatur bekannte Comonomere mit einer beliebigen funktionellen Gruppe, wobei sich die Auswahl dieser funktionellen Gruppe nach Art der eingesetzten Vernetzerkomponente sowie danach richtet, ob diese funktionelle Gruppe zur Vernetzung der Polymeren dient oder ob das Copolymerisat noch in einem zweiten Schritt mit Verbindungen umgesetzt wird, die neben einer mit den funktionellen Gruppen der Komponente $a_3$ reaktiven Gruppe noch mindestens eine vernetzbare Gruppe aufweisen.

Die Menge an Komponente $a_3$ beträgt 10 bis 40 Gew.-%, bevorzugt 15 bis 35 Gew.-%.

Vorteilhafterweise kommen als Monomer der Komponente $a_3$ Monomere, die Gruppen mit aktivem Wasserstoff enthalten, bevorzugt acetoacetatgruppenhaltige Monomere, in Frage, wie beispielsweise Acetoacetoxiethylmethacrylat, Addukte von Hydroxialkylestern der Acryl- und Methacrylsäure mit Methylacetoacetat, Ethylacetoacetat, n-Propylacetoacetat, iso-Propylacetoacetat, n-Butylacetoacetat, iso-Butylacetoacetat und t-Butylacetoacetat.

Bevorzugt eingesetzt wird Acetoacetoxiethylmethacrylat.

Neben der Möglichkeit, die Acetoacetatgruppen bzw. die Gruppen, die aktiven Wasserstoff enthalten, durch entsprechende Monomere direkt in das Copolymerisat einzuführen, besteht ferner die bevorzugte Möglichkeit, diese zur Vernetzung des Copolymerisats dienenden Acetoacetatgruppen u. dgl. dadurch einzuführen, daß zunächst ein hydroxylgruppenhaltiges Copolymerisat (A) aufgebaut wird, welches in einer zweiten Stufe mit Verbindungen (V) umgesetzt wird, die eine gegenüber Hydroxylgruppen reaktive Gruppe sowie mindestens ein aktives Wasserstoffatom enthalten. Bevorzugt werden Verbindungen (V) eingesetzt, die Acetoacetatgruppen enthalten.

Als Komponente $a_3$ kommen in diesem Fall Hydroxialkylester α,β-ungesättigter Carbonsäuren mit primären oder sekundären Hydroxilgruppen in Frage. Selbstverständlich können auch Mischungen von Hydroxialkylestern mit primären Hydroxilgruppen und Hydroxialkylestern mit sekundären Hydroxylgruppen verwendet werden. Beispiele für geeignete Hydroxialkylester α,β-ungesättigter Carbonsäuren mit primären Hydroxylgruppen sind Hydroxiethylacrylat, Hydroxipropylacrylat, Hydroxibutylacrylat, Hydroxiamylacrylat, Hydroxihexylacrylat, Hydroxioctylacrylat und die entsprechenden Methacrylate. Als Beispiele für verwendbare Hydroxialkylester mit einer sekundären Hydroxylgruppe seien 2-Hydroxipropylacrylat, 2-Hydroxibutylacrylat, 3-Hydroxibutylacrylat und die entsprechenden Methacrylate genannt.

Selbstverständlich können jeweils auch die entsprechenden Ester anderer, α,β-ungesättigter Carbonsäuren, wie z.B. der Crotonsäure und der Isocrotonsäure eingesetzt werden.

Vorteilhafterweise kann die Komponente $a_3$ zumindest teilweise ein Umsetzungsprodukt aus einem Mol Hydroxiethylacrylat und/oder Hydroxiethylmethacrylat und durchschnittlich zwei Mol ε-Caprolacton sein.

Als Komponente $a_3$ kann zumindest teilweise auch ein Umsetzungsprodukt aus Acrylsäure und/oder Methacrylsäure mit dem Glycidylester einer Carbonsäure mit einem tertiären α-Kohlenstoffatom eingesetzt werden. Glycidylester stark verzweigter Monocarbonsäuren sind unter dem Handelsnamen "Cardura" erhältlich. Die Umsetzung der Acrylsäure oder Methacrylsäure mit dem Glycidylester einer Carbonsäure mit einem tertiären α-Kohlenstoffatom kann vor, während oder nach der Polymerisationsreaktion erfolgen. Es ist darauf zu achten, daß die Säurezahl des fertigen Polyacrylats im Bereich von 5 bis 30 mg KOH/g, bevorzugt 8 bis 25 mg KOH/g liegt.

Zur Einführung der Acetoacetatgruppen in das Copolymerisat (C) als Verbindung (V) geeignet sind insbesondere Alkylester der Acetessigsäure mit 1 bis 4 C-Atomen im Alkylrest, so z.B. Ethylacetoacetat, t-Butylacetoacetat, Methylacetoacetat, n-Propylacetoacetat, iso-Propylacetoacetat, n-Butylacetoacetat und iso-Butylacetoacetat.

Bevorzugt eingesetzt werden Ethylacetoacetat und t-Butylacetoacetat.

Weiterhin können als vernetzbare reaktive Gruppen auch andere C-H-acide Gruppen, beispielsweise auf Basis von Cyanessigsäure, Malonsäure, Cyclopentanoncarbonsäure, Methantricarbonsäure und Cyclohexanoncarbonsäure sowie den jeweiligen Alkylestern bzw. anderen geeigneten Derivaten in dem Copolymerisat (C) enthalten sein.
Diese Gruppen können analog zu den Acetoacetatgruppen dadurch eingeführt werden, daß zunächst ein hydroxylgruppenhaltiges Acrylatcopolymerisat (A) aufgebaut wird, das mit den genannten Säuren verestert bzw. mit den Alkylestern umgeestert wird. Daneben besteht aber auch die Möglichkeit, zunächst ein carboxylgruppenhaltige Acrylatcopolymerisat (A) durch Verwendung von carboxylgruppenhaltigen Monomeren $a_3$ herzustellen und dieses carboxylgruppenhaltige Copolymerisat A dann mit Verbindungen (V) umzusetzen, die Umsetzungsprodukte eines Polyepoxids mit n Mol Epoxigruppen und (n-1) Mol einer Verbindung mit Carboxyl- oder Aminogruppen und der Gruppe mit aktivem Wasserstoff darstellen. Als Beispiel hierfür sei das Umsetzungsprodukt aus 1 Mol Trimethylolpropantriglycidylether und 2 Mol Cyanessigsäure oder 2 Mol Acetessigsäure genannt.
Vorteilhafterweise können als vernetzbare Gruppen auch ethylenisch ungesättigte Doppelbindungen in das Copolymerisat eingeführt werden, und zwar besonders bevorzugt mittels eines zweistufigen Verfahrens, indem zunächst ein Copolymerisat (A) mit funktionellen Gruppen, wie z.B. Hydroxyl-, Carboxyl-, Epoxid-, Amino-, Iso- cyanat- und Estergruppen aufgebaut wird und dieses Copolymerisat (A) dann mit Verbindungen (V) umgesetzt wird, die außer mindestens einer ethylenisch ungesättigten Doppelbindung noch eine mit den funktionellen Gruppen der Komponente $a_3$ reaktionsfähige Gruppe aufweisen.
So sind als Komponente $a_3$ die bereits oben genannten hydroxylgruppenhaltigen Monomeren geeignet. Das so hergestellte hydroxylgruppenhaltige Copolymerisat (A) kann dann in einer zweiten Stufe mit Monoestern $\alpha,\beta$-ungesättigter Carbonsäuren als Verbindung (V) in einer Umesterungsreaktion umgesetzt werden. Vorteilhafterweise kommen in diesem Fall als Verbindung (V) Ester von $\alpha,\beta$-ungesättigten Carbonsäuren in Frage, deren Estergruppen nicht mehr als 4 bis 6 Kohlenstoffatome haben, wie z.B. Methylacrylat, Ethylacrylat, Propylacrylat, Butylacrylat, Iso- propylacrylat, Isobutylacrylat, Pentylacrylat, die entsprechenden Methacrylate sowie die entsprechenden Ester der Fumarsäure, Maleinsäure, Crotonsäure, Dimethylacrylsäure. Die Verbindungen (V) werden in bekannten Umesterungsreaktionen mit den OH-Gruppen des Acrylatcopolymerisats (A) umgesetzt.
Weiterhin kann das hydroxylgruppenhaltige Copolymerisat (A) auch mit $\alpha,\beta$-ungesättigten Carbonsäuren als Verbindungen (V) in bekannten Veresterungsreaktionen umgesetzt werden. Beispiele für geeignete $\alpha,\beta$-ungesättigte Carbonsäuren sind Acryl-, Methacryl-, Fumar-, Malein-, Croton-, Isocroton- und Dimethylacrylsäure. Bevorzugt eingesetzt werden Acryl- und Methacrylsäure.

Vorteilhafterweise können zur Umsetzung mit dem hydroxylgruppenhaltigen Copolymerisat (A) auch Verbindungen (V) eingesetzt werden, die ein Alkoximethylgruppen enthaltendes Amid einer $\alpha,\beta$-ungesättigten Carbonsäure sind oder der allgemeinen Formel

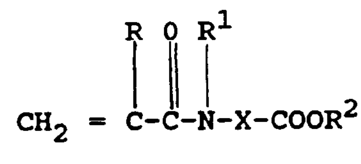

entsprechen,
mit

$R = H, CH_3$
$R^1 = H$, Alkyl, Aryl
$R^2 =$ Alkyl

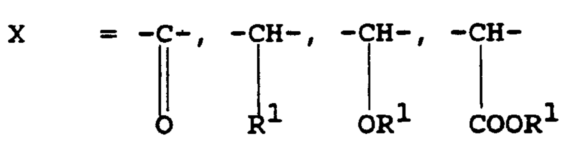

Beispiele für solche Verbindungen sind Methoximethylacrylamid, Methoximethylmethacrylamid, Butoximethylacrylamid, Butoximethylmethacrylamid, Isobutoximethylacrylamid, Isobutoximethylmethacrylamid, analoge Amide der Fumarsäure, Crotonsäure und der Dimethylacrylsäure, Glykolsäurederivate, wie Methylacrylamidoglykolatmethylether, Butylacrylamidoglykolatbutylether, Methylacrylamidoglykolat und Butylacrylamidoglykolat.

Die erfindungsgemäßen Copolymerisate können aber auch dadurch hergestellt werden, daß als Komponente $a_3$ epoxidgruppenhaltige Monomere eingesetzt werden und das entstehende epoxidgruppenhaltige Copolymerisat (A) bevorzugt anschließend mit Verbindungen (V) umgesetzt wird, die außer mindestens einer ethylenisch ungesättigten Doppelbindung eine Carboxyl- oder Aminogruppe enthalten. Selbstverständlich kann aber auch das epoxidgruppenhaltige Copolymerisat direkt für die Vernetzung als Copolymerisat mit vernetzbaren Gruppen eingesetzt werden.

Als Epoxidgruppen enthaltende ethylenisch ungesättigte Monomere $a_3$ geeignet sind Glycidylester ungesättigter Carbonsäuren und/oder Glycidylether von ungesättigten Verbindungen, wie z.B. Glycidylacrylat, Glycidylmethacrylat, Glycidylester der Fumar- und Maleinsäure, Glycidylvinylphthalat, Glycidylallylphthalat und Glycidylallylmalonat.

Die Verbindung (V) ist ist vorteilhafterweise ausgewählt aus der Gruppe Acrylsäure, Methacrylsäure, Crotonsäure, Dimethylacrylsäure, Fumarsäuremonomethylester, Umsetzungsprodukte aus Carbonsäureanhydriden und Hydroxyalkylestern $\alpha,\beta$-ungesättigter Säuren, wie Addukte aus Hexahydrophthalsäureanhydrid, Phthalsäureanhydrid, Tetrahydrophthalsäureanhydrid oder Maleinsäureanhydrid und Hydroxyethyl(meth)acrylat, Hydroxypropyl(meth)acrylat. Die Verbindung (V) kann weiterhin t-Butylaminoethyl(meth)acrylat, Bisacrylamidoessigsäure oder

Bis(acrylamidoethyl)amin sein. Besonders bevorzugt werden Verbindungen mit mehreren aktivierten Doppelbindungen eingesetzt, wie z.B. Bisacrylamidoessigsäure.

Weiterhin können als Komponente $a_3$ auch carbonsäurefunktionelle Monomere, beispielsweise Acryl-, Methacryl-, Itacon-, Croton-, Isocroton-, Aconit-, Malein- und Fumarsäure, Halbester der Malein- und Fumarsäure sowie

$\beta$-Carboxiethylacrylat und Addukte von Hydroxialkylestern der Acrylsäure und/oder Methacrylsäure mit Carbonsäureanhydriden, wie z.B. der Methylhexahydrophthalsäure-mono-2-methacryloyloxiethylester der Hexahydrophthalsäure-mono-2-meth-acryloyloxiethylester und der Phthalsäure-mono-2-methacryloyloxiethylester eingesetzt werden.

Das so erhaltene carboxylgruppenhaltige Copolymerisat (A) wird dann in einer zweiten Stufe mit Verbindungen (V) umgesetzt, die außer mindestens einer ethylenisch ungesättigten Doppelbindung noch eine OH-, NH-, Epoxi- oder SH-Gruppe enthalten. Beispiele für geeignete Verbindungen (V) sind die bereits aufgeführten Hydroxialkylester ethylenisch ungesättigter Carbonsäuren sowie die bereits aufgeführten epoxidgruppenhaltigen Monomeren.

Die erfindungsgemäßen Copolymeren (C) können als vernetzbare Gruppen auch cyclische Anhydridgruppen enthalten. Diese Copolymeren (C) können durch Verwendung von anhydridgruppenhaltigen Monomeren $a_3$, wie z.B. Maleinsäureanhydrid, Itaconsäureanhydrid, Citraconsäureanhydrid, Propenylbernsteinsäureanhydrid sowie anderen copolymerisierbaren Verbindungen mit cyclischen Carbonsäureanhydridgruppen hergestellt werden. Vorteilhafterweise enthalten die anhydridgruppenhaltigen Copolymerisate (C) zusätzlich andere funktionelle Gruppen, die nicht zur Reaktion mit den cyclischen Anhydridgruppen befähigt sind. Besonders bevorzugt enthalten die anhydridgruppenhaltigen Copolymerisate zusätzlich freie Carbonsäuregruppen, die sowohl zur Vernetzung als auch, wenn sie nur in kleineren Mengen enthalten sind, zur besseren Pigmentbenetzung dienen können. Diese Säurefunktionen können sowohl durch die Mitverwendung von säurefunktionellen Monomeren $a_3$ als auch durch partielle Hydrolyse der Anhydrid-funktionen eingeführt werden. Vorteilhaft ist auch der Einbau von Glycidylgruppen zusätzlich zu den Anhydridgruppen.

Das Copolymerisat (A) kann als funktionelles Monomer $a_3$ auch estergruppenhaltige Monomere enthalten, wobei der Veresterungsalkohol vorteilhafterweise nicht mehr als 6 C-Atome, bevorzugt 1 bis 4 C-Atome enthalten sollte. Dieses estergruppenhaltige Copolymerisat (A) wird dann mit Verbindungen (V) umgesetzt, die außer mindestens einer ethylenisch ungesättigten Doppelbindung eine OH-, NH- oder SH-Gruppe aufweisen. Als estergruppenhaltige Monomere $a_3$ kommen Alkylester von Acrylsäure, Methacrylsäure, Crotonsäure, Malein- und Fumarsäure in Frage, wie z.B. die entsprechenden Methyl-, Ethyl-, Propyl-, Isopropyl-, Butyl-. Isobutyl- und Pentylester.

Längerkettige Alkoholreste in der Estergruppe sind weniger günstig, da ihre Umesterung und ihr Abdestillieren nach der Umesterung zu hohe Temperaturen erfordert. Außerdem kommen die entsprechenden Aminoalkylester der genannten $\alpha,\beta$-ungesättigten Carbonsäuren in Frage. Das Copolymerisat mit den vernetzbaren Gruppen wird dann durch Umesterungs- oder Umamidierungsreaktionen erhalten. Diese Reaktionen sind dem Fachmann bekannt und bedürfen keiner weiteren Erläuterung.

Beispiele für geeignete OH-, NH- und SH-haltige, ethylenisch ungesättigte Verbindungen (V) sind die bereits aufgeführten, für die Umsetzung mit carboxylgruppenhaltigen Copolymerisate (A) geeigneten Verbindungen (V).

Als Komponente $a_3$ können auch isocyanatgruppenhaltige Monomere eingesetzt werden. Das erhaltene Isocyanatgruppen aufweisende Copolymerisat wird bevorzugt in einer zweiten Stufe mit Verbindungen (V) umgesetzt, die außer mindestens einer ethylenisch ungesättigten Doppelbindung noch eine OH-, NH-, SH- oder COOH-Gruppe enthalten.

Die isocyanatgruppenhaltigen Monomeren $a_3$ können ausgewählt sein aus der Gruppe vinylischer Isocyanate, wie z.B. Vinylisocyanat und m-Isopropenyl-α,α-dimethylenbenzylisocyanat, Isocyanatoalkylester α,β-ungesättigter Carbonsäuren der allgemeinen Formel

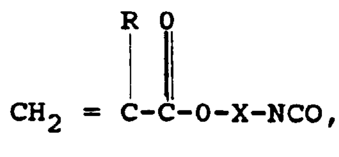

wobei R = H, $CH_3$, $C_2H_5$
und X = $(CH_2)_n$ mit n = 1 - 12
bedeuten.
Als Komponente $a_3$ können auch Addukte beispielsweise von Isophorondiisocyanat an Hydroxialkyl(meth)acrylate, wie z.B. Hydroxiethylmethacrylat, eingesetzt werden.

Beispiele für geeignete OH-, SH-, NH- un COOH-haltige ethylenisch ungesättigte Verbindungen (V) sind die bereits aufgeführten Monomeren. Es ist aber vorteilhaft, für die Addition solche Verbindungen auszuwählen, die neben der OH-, NH-, SH- oder COOH-Gruppe zwei oder mehr ethyle-nisch ungesättigte Doppelbindungen enthalten. Auf diese Weise werden mit einem Additionsschritt zwei oder mehr Doppelbindungen eingeführt. Dies ist insofern günstig, da bei der Addition von Hydroxylgruppen an Isocyanatgruppen Urethan- bzw. Harnstoffgruppen gebildet werden, die im allgemeinen die Viskosität der Bindemittel stark erhöhen, was nicht immer wünschenswert ist. Als Beispiel hierfür seien die Umsetzungsprodukte aus Acrylsäure oder Methacrylsäure oder einer anderen α,β-ethylenisch ungesättigten Carbonsäure und Glycidylacrylat bzw. Glycidylmethacrylat aufgeführt. Durch diese Umsetzung entsteht eine freie Hydroxylgruppe, die dann an die NCO-Gruppen des Acrylatcopolymerisats addiert wird.

Vorteilhafterweise kann die Monomerkomponente $a_3$ zur Herstellung des Acrylatcopolymers (A) ein Alkoximethylgruppen enthaltendes Amid einer α,β-ungesättigten Carbonsäure oder eine Verbindung der allgemeinen Formel

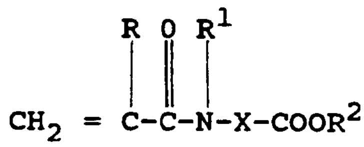

entsprechen,
mit

R = H, $CH_3$
$R^1$ = H, Alkyl, Aryl
$R^2$ = Alkyl

X =

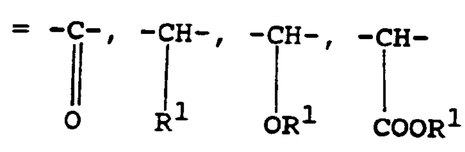

In diesem Fall werden ggf. als Verbindung (V) Verbindungen eingesetzt, die außer mindestens einer ethylenisch ungesättigten Doppelbindung OH-, NH- oder SH-Gruppen enthalten. Beispiele für derartige Monomeren $a_3$ sind N-Alkoximethyl(meth)acrylamide, wie Methoximethylacrylamid, Methoximethyl-methacrylamid, Isobutoxiacrylamid, Isobutoximethacrylamid und Isobutoximethylmethacrylamid. Außerdem sind geeignet die Alkoxi(meth)acrylamidoglykolatalkylether.

Zum Aufbau des Copolymerisats (C) können außerdem 0 bis 40 Gew.-% anderer, ethylenisch ungesättigter, copolymerisierbarer Monomerer (Komponente $a_4$) eingesetzt werden. Die Auswahl dieser Monomerer ist nicht besonders kritisch. Es ist aber darauf zu achten, daß der Einbau dieser Monomeren nicht zu unerwünschten Eigenschaften des Copolymerisats führt. So richtet sich die Auswahl der Komponente $a_4$ weitgehend nach den gewünschten Eigenschaften der härtbaren Zusammensetzung in bezug auf Elastizität, Härte, Verträglichkeit und Polarität.
Bevorzugt werden als Komponente $a_4$ Alkylester von olefinisch ungesättigten Carbonsäuren eingesetzt. Beispiele hierfür sind Methyl(meth) acrylat, Ethyl(meth)acrylat, Propyl(meth)acrylat, Butyl(meth)acrylat, Isopropyl(meth)acrylat, Isobutyl(meth)acrylat, Pentyl(meth)acrylat, Isoamyl(meth)- acrylat, Hexyl(meth)acrylat, Cyclohexyl(meth)acrylat, 2-Ethylhexyl(meth)acrylat, Octyl(meth)acrylat, 3,5,5-Trimethylhexyl(meth) acrylat, Decyl(meth)acrylat, Dodecyl(meth)acrylat, Hexadecyl(meth)acrylat, Octadecyl(meth)acrylat, Octadecenyl(meth)acrylat sowie die entsprechenden Ester der Malein-, Fumar-, Tetrahydrophthal-, Croton-, Isocroton-, Vinylessig- und Itaconsäure.
Geeignet als Komponente $a_4$ sind weiterhin andere ethylenisch ungesättigte Verbindungen, wie beispielsweise Alkoxiethylacrylate, Aryloxiethylacrylate und die entsprechenden Methacrylate, wie z.B. Butoxiethyl(meth) acrylat, Phenoxiethyl(meth)acrylat; ungesättigte Carbonsäuren wie, z.B. Acrylsäure, Methacrylsäure, Itaconsäure, Crotonsäure und Halbester der Maleinund Fumarsäure sowie deren Mischungen; ungesättigte Verbindungen mit tertiären Aminogruppen, wie z.B. N,N′-Diethylaminoethylmethacrylat, 2-Vinylpyridin, N,N-Dimethylaminoethylmethacrylat, 4-Vinylpyridin, Vinylpyrrolin, Vinylchinolin, Vinylisochinolin, N,N′-Dimethylaminoethylvinylether und 2-Methyl-5-vinylpyridin; Verbindungen wie z.B. Acrylnitril, Methacrylnitril, Acrolein und Methacrolein.

Die Polymerisation der Monomerkomponenten $a_1$ bis $a_4$ wird vorzugsweise unter Ausschluß von Sauerstoff, z.B. durch Arbeiten in einer Stickstoff-Atmosphäre, durchgeführt. Der Reaktor ist mit entsprechenden Rühr-, Heiz- und Kühleinrichtungen sowie mit einem Rückflußkühler, in dem flüchtige Bestandteile, wie z.B. Styrol, zurückgehalten werden, ausgerüstet.
Die Polymerisationsreaktion wird bei Temperaturen von 130 - 200°C, bevorzugt 150 - 180°C, unter Verwendung von Polymerisationsinitiatoren und ggf. polymerisationsreglern durchgeführt. Geeignete radikalische Initiatoren sind organische Peroxide, wie z.B. Dibenzoylperoxid, Dicumylperoxid, t-Butylcymylperoxid, t-Amylcumylperoxid, Cumolhydroperoxid, Di-tert.-butylperoxid, tert.-Butylhydroperoxid, 2,2-Di-tert.-butylperoxybutan, tert.- Amylperbenzoat, 1,3-Bis(tert.-butylperoxyisopropyl)benzol, Diisopropylbenzolmonohydroperoxid und Diacylperoxide, wie z.B. Diacetylperoxid, Peroxyketal, wie z.B. 2,2-Di-(tert.-amylperoxy)-propan und Ethyl-3,3- di(tert.-amylperoxy)-butyrat, thermolabile hochsubstituierte Ethanderivate, beispielsweise auf Basis silylsubstituierter Ethanderivate und auf Basis Benzpinakol. Weiterhin können auch aliphatische Azoverbindungen, wie beispielsweise Azobiscyclohexannitril, eingesetzt werden. Je nach einaesetzten Monomeren besteht bei Verwendung von Azoverbindungen allerdings die Gefahr von Gelbfärbungen der Polymeren, die - je nach Verwendungszweck der Polymeren - störend sein können, so daß in diesen Fällen andere Initiatoren eingesetzt werden müssen.
Die Initiatormenge beträgt in den meisten Fällen 0,1 bis 5 Gew.-%, bezogen auf die zu verarbeitende Monomerenmenge, sie kann ggf. aber auch höher liegen. Der Initiator, gelöst in einem Teil des für die Polymerisation eingesetzten Lösungsmittels, wird allmählich während der Polymerisationsreaktion zudosiert. Bevorzugt dauert der Initiatorzulauf etwa 1 bis 2 Stunden länger als der Monomerenzulauf, um so auch eine gute Wirkung während der Nachpolymerisationsphase zu erzielen. Werden Initiatoren mit nur einer geringen Zerfallsrate unter den vorliegenden Reaktionsbedingungen eingesetzt, so ist es auch möglich, den Initiator ganz oder teilweise vorzulegen.
Bevorzugt wird die Reaktion in Gegenwart von Polymerisationsreglern durchgeführt, da so Trübungen der Polymerlösungen besser vermieden werden können. Als Regler eignen sich vorzugsweise Mercaptoverbindungen, wobei besonders bevorzugt Mercaptoethanol eingesetzt wird. Andere mögliche Regler sind beispielsweise Alkylmercaptane, wie z.B. t-Dodecylmercaptan, Octylmercaptan, Phenylmercaptan, Octyldecylmercaptan, Butylmercaptan, Thiocarbonsäuren, wie etwa Thioessigsäure oder Thiomilchsäure. Bei anhydridfunktionellen Comonomeren ist darauf zu achten, daß der Regler nicht oder nur in geringem Maße mit den cyclischen Anhydrid-Gruppen reagieren kann. In diesem Fall wird bevorzugt t-Dodecylmercaptan eingesetzt.
Diese Regler werden in einer Menge von bis zu 2 Gew.-%, bezogen auf die zu verarbeitende Monomerenmenge, eingesetzt. Vorzugsweise werden sie in einem der Monomerenzuläufe gelöst und mit den Monomeren zugegeben. Bevorzugt ist die zugegebene Reglermenge zeitlich konstant.

Die Polymerisation wird in einem hochsiedenden, organischen, gegenüber den eingesetzten Monomeren inerten, Lösungsmittel durchgeführt, bevorzugt bei einem Polymerisationsfestkörper von mindestens 70 %. Beispiele für geeignete Lösungsmittel sind hochsiedende Alkohole, wie z.B. n-Hexanol, 2-Ethylhexanol, Isooctylalkohol, Isononylalkohol, Isodecylalkohol, Isotridecylalkohol, Cyclohexanol, Methylcyclohexanol, Benzylalkohol, Methylbenzylalkohol, Tetrahydrofufurylalkohol, Diacetonalkohol, 2,6-Dimethyl-4-heptanol, 4-Methyl-2-pentanol, Tridecanol, Glykole und Glykolderivate, wie z.B. Ethylenglykol, 1,2-Propylenglykol, 1,3-Butylenglykol, Butandiol-1,4, Hexylenglykol, 2-Ethylhexandiol-1,3, Diethylenglykol, Triethylenglykol, Dipropylenglykol, Methyldiglykol, Ethyldiglykol, Butyldiglykol, Hexyldiglykol, Tripropylenglykolmethylether, Methoxytriglykol, Ethylglykolacetat, Butylglykolacetat, Ethyldiglykolacetat, Ethylenglykoldiacetat; höher substituierte Aromaten, wie z.B. Solvent Naphtha$^R$, Schwerbenzol, verschiedene Solvesso$^R$- Typen, verschiedene Shellsol$^R$-Typen und Deasol$^R$ sowie höhersiedende aliphatische und cycloaliphatische Kohlenwasserstoffe, wie z.B. verschiedene Testbenzine, Mineralterpentinöl, Tetralin und Dekalin. Bei bestimmten Monomerkombinationen (wie z.B. aminofunktionelle plus carboxylfunktionelle Monomere) sollten nur inerte Lösungsmittel, wie aromatische und aliphatische Kohlenwasserstoffe oder Ester eingesetzt werden.

Werden die Copolymerisate in einer 2. Stufe noch durch Umsetzen mit Verbindungen (V) modifiziert, die eine gegenüber den Gruppen der Komponente $a_3$ reaktive Gruppe und mindestens eine vernetzbare Gruppe enthalten, so muß das bei der Polymerisation, also Herstellung der Polymeren (A), eingesetzte Lösungsmittel selbstverständlich auch gegenüber den Verbindungen (V) inert sein.

Es ist erfindungswesentlich, daß die Copolymerisation der Komponenten $a_1$ bis $a_4$ folgendermaßen durchgeführt wird:

In dem Reaktor werden zunächst mindestens 60 % Gew.-%, bevorzugt 100 Gew.-%, der insgesamt einzusetzenden Menge der Komponente $a_1$ zusammen mit einem Teil der insgesamt einzusetzenden Lösungsmittelmenge vorgelegt und auf die jeweilige Reaktionstemperatur aufgeheizt. Die restliche Menge des Lösungsmittels wird wie bereits beschreiben - vorzugsweise zusammen mit dem Katalysator allmählich zugefügt. Die ggf. noch vorhandene restliche Menge der Komponente $a_1$ sowie die übrigen Monomeren (Komponenten $a_2$, $a_3$ und $a_4$) werden innerhalb eines für alle Komponenten gleich langen Monomerenzugabezeitraumes (beträgt i.a. 2 - 10 h, wie für Acrylatcopolymerisationen üblich) zu der vorgelegten Komponente $a_1$ folgendermaßen zudosiert:

i) Die pro Zeiteinheit zugegebene Menge der ggf. noch vorhandenen Komponente $a_1$ (d.h. die Restmenge der Komponente $a_1$, die nicht vorgelegt wurde) bleibt innerhalb des Monomerenzugabezeitraumes konstant oder nimmt ab, wobei die letzte Verfahrensvariante bevorzugt ist. Im Fall einer konstanten Zugabemenge wird die Komponente $a_1$ bevorzugt zusammen mit den Komponenten $a_3$ und $a_4$ zudosiert.

ii) Die pro Zeiteinheit zugegebene Menge der Komponenten $a_3$ und $a_4$ bleibt innerhalb des Monomerenzugabezeitraumes konstant.

iii) Die pro Zeiteinheit zugegebene Menge der Komponente $a_2$ wird innerhalb des Monomerenzugabezeitraumes so variiert, daß die innerhalb des
ersten Drittels des Monomerenzugabezeitraumes insgesamt zugegebene Menge der Komponente $a_2$
15 bis 30 Gew.-%, bevorzugt
18 bis 26 Gew.-%, der Gesamtmenge der Komponente $a_2$ beträgt. Innerhalb des zweiten Drittels des Monomerenzugabezeitraumes werden insgesamt 25 bis 40 Gew.-%, bevorzugt 30 bis 38 Gew.-% und innerhalb des letzten Drittels des Monomerenzugabezeitraumes werden 35 bis 60 Gew.-%, bevorzugt 40 bis 50 Gew.-%, der Gesamtmenge der Komponente $a_2$ zudosiert, wobei
selbstverständlich die Summe der Zugabemengen im 1., 2 und 3. Drittel
100 Gew.-% beträgt.

Für die Variation der pro Zeiteinheit zugegebenen Menge der Komponente $a_2$ bestehen verschiedene Möglichkeiten, entscheidend ist nur, daß die oben angegebenen, im jeweiligen Drittel insgesamt zugegebenen Mengen eingehalten werden. So besteht beispielsweise die Möglichkeit einer stufenweisen Veränderung der pro Zeiteinheit zugegebenen Menge der Komponente $a_2$. Die Zahl der Stufen, bei denen die Zugabemenge jeweils geändert wird, kann beliebig gewählt werden. So kann beispielsweise die Zugabemenge pro Zeiteinheit der Komponente $a_2$ nur zu Beginn des zweiten und/oder zu Beginn des dritten Drittels erhöht werden. Innerhalb des Drittels bleibt die Zugabemenge pro Zeiteinheit dann jeweils konstant.

Es ist aber auch möglich, die pro Zeiteinheit zugegebene Menge der Komponente $a_2$ kontinuierlich zu verändern, entsprechend dem Grenzfall einer unendlichen Stufenzahl.

Die Zugabe der Komponenten in der genannten Weise fördert, wie angenommen wird, die Copolymerisation und reduziert die Homopolymerisation der Einzelkomponenten. Zusätzlich werden Copolymerisate mit einem sehr niedrigen Restmonomerengehalt erhalten, die klare Lösungen mit einem hohen Festkörpergehalt ergeben.

Die so erhaltenen Copolymerisate (C) weisen einen Gehalt von im Mittel 1,25 bis 30, bevorzugt 2 bis 15 vernetzbaren Gruppen je Molekül und ein mittleres Molekulargewicht (Zahlenmittel) von 1500 bis 6000 auf. 50 %ige Lösungen der erfindungsgemäßen Copolymeren in Butylacetat haben typischerweise Viskositäten von 0,2 bis 4 dPas bei 23°C.

Gegenstand der Erfindung ist auch ein Verfahren zur Herstellung der Copolymerisate nach einem der Ansprüche 1 bis 17 mittels radikalischer Lösungspolymerisation, das dadurch gekennzeichnet ist, daß

A) die Monomeren $a_1$ bis $a_4$ bei Temperaturen von 130 bis 200°C durch radikalische Lösungspolymerisation zu einem Copolymerisat (A) umgesetzt werden, wobei

1.) mindestens 60 Gew.-% der Gesamtmenge der Komponente $a_1$ vorgelegt werden,

2.) die Komponenten $a_2$ bis $a_4$ und der ggf. vorhandene Rest der Komponente $a_1$ innerhalb eines für alle Komponenten gleich langen Monomerenzugabezeitraumes so zudosiert werden, daß

i) die pro Zeiteinheit zugegebene Menge der Komponente $a_1$ innerhalb des Monomerenzugabezeitraumes konstant bleibt oder abnimmt,

ii) die pro Zeiteinheit zugegebene Menge der Komponenten $a_3$ und $a_4$ innerhalb des Monomerenzugabezeitraumes konstant bleibt und

iii) die innerhalb des ersten Drittels des Monomerenzugabezeitraumes zugegebene Menge der Komponente $a_2$ 15 bis 30 Gew.-% der Gesamtmenge der Komponente $a_2$, innerhalb des zweiten Drittels 25 - 40 Gew.-% und innerhalb des letzten Drittels 35 bis 60 Gew.-% der Gesamtmenge der Komponente $a_2$ beträgt und

(B) das in der Stufe A erhaltene Copolymerisat ggf. mit Verbindungen (V) umgesetzt wird, die eine gegenüber den Gruppen der Komponenten $a_3$ reaktive Gruppe und mindestens eine C-H-acide Gruppe oder mindestens eine ethylenisch ungesättigte Doppelbindung oder mindestens eine Epoxidgruppe oder mindestens eine cyclische Anhydridgruppe oder mindestens eine Isocyanatgruppe als vernetzbare Gruppe enthalten,

wobei die vernetzbaren Gruppen dadurch in das Copolymerisat (C) eingeführt worden sind, daß als Komponente $a_3$ ethylenisch ungesättigte Monomere mit mindestens einer C-H-aciden Gruppe oder mindestens einer ethylenisch ungesättigten Doppelbindung oder mindestens einer Epoixidgruppe oder mindestens einer cyclischen Anhydridgruppe oder mindestens einer Isocyanatgruppe eingesetzt worden sind und/oder das in Stufe A erhaltene Copolymerisat mit Verbindungen (V) umgesetzt worden ist, die eine gegenüber den funktionellen Gruppen der Komponente $a_3$ reaktive Gruppe mindestens eine C-H-acide Gruppe oder ethylenisch ungesättigte Doppelbindung oder Epoxidgruppe oder cyclische Anhydridgruppe oder Isocyanatgruppe als vernetzbare Gruppe enthalten.

Die in diesem Verfahren einsetzbaren Komponenten $a_1$ bis $a_4$ sowie die Durchführung des erfindungsgemäßen Verfahrens sind bereits ausführlich im Zusammenhang mit den erfindungsgemäßen Copolymerisaten (C) beschrieben, so daß hier nur auf diese Beschreibung verwiesen wird.

Gegenstand der vorliegenden Erfindung sind weiterhin Beschichtungsmittel, die die erfindungsgemäßen Copolymerisate als Bindemittelkomponente enthalten. Als Härterkomponente eignen sich in diesen Beschichtungsmitteln Verbindungen, die gegenüber den vernetzbaren Gruppen des Copolymerisats (C) reaktive Gruppen aufweisen. Der Vernetzer wird dabei den Bindemitteln in solch einer Menge zugesetzt, daß das Molverhältnis der reaktiven Gruppen des Copolymerisats (C) zu den reaktiven Gruppen des Vernetzers zwischen 0,3 : 1 und 3 : 1 liegt. Die Auswahl der Art des Vernetzers richtet sich dabei nach der Art der reaktiven, vernetzbaren Gruppen des Copolymerisats (C). Enthält das Copolymerisat (C) als vernetzbare Gruppen ethylenisch ungesättigte Doppelbindungen, Epoxid- oder Anhydridgruppen, so können als Vernetzerkomponente Verbindungen eingesetzt werden, die entweder mindestens eine primäre Aminogruppe, welche mit einem Aldehyd oder Keton mit nicht mehr als 10 Atomen blockiert ist oder mindestens 2 Gruppen, die zu NH-Gruppen hydrolysierbar sind, enthalten und die als Michael-Donator dienen können.

Beispiele für geeignete Verbindungen, die in aldiminisierter bzw. ketiminisierter Form eingesetzt werden, sind aliphatische und/oder cycloaliphatische Amine mit mindestens einer, bevorzugt zwei oder vier, primären Aminogruppen und 2 bis 24 C-Atomen. Sie weisen bevorzugt zahlenmittlere Molekulargewichte unterhalb von 700 auf. Bevorzugt weisen sie außerdem noch 0 bis 4 sekundäre Aminogruppen auf. Weiterhin bevorzugt sind auch Alkanolamine.

Beispiele für geeignete Amine sind Ethylendiamin, Tri-, Tetra-, Penta-, Hexa-, Hepta-, Nona-, Deca-, Dodecamethylendiamin, 2,2,4- bzw. 2,4,4-Trimethylhexamethylendiamin, Propylendiamin, 1,3- bzw. 1,4-Butylendiamin, Isophorondiamin, 1,2- und 1,4-Diaminocyclohexan, 4,4′-Diaminodicyclohexylmethan, Bis-(3-methyl-4-aminocyclohexyl-)methan, 2,2-Bis-(4- aminocyclohexyl-)propan, 4,7-Dioxadecan-1,10-diamin, 4,9-Dioxadodecan-1,12-diamin, 7-Methyl-4,10-dioxatridecan-1,13-diamin, Nitrilotris(ethanamin), Ethanolamin, Propanolamin, N-(2-Aminoethyl-)ethanol, Polyetherpolyamine, Bis-(3-aminopropyl)-methylamin, 3-Amino-1-methylaminopropan, 3-Amino-1-(cyclohexylamino-)propan, N-(2-hydroxiethyl)-ethylendiamin, Tris(2-aminoethyl-)amin sowie Polyamine der Formel $H_2N(R_2\text{-}NH)_n\text{-}R_1\text{-}NH_2$. n ist eine ganze Zahl zwischen 1 und 6, bevorzugt 1 - 3, $R_1$ und $R_2$

sind gleiche oder verschiedene Alkylengruppen bzw. Cycloalkylengruppen bzw. Ethergruppen enthaltende Alkylengruppen mit 2 - 6, bevorzugt 2 - 4 C-Atomen. Beispiele für derartige Polyalkylenpolyamine sind Diethylentriamin, Triethlentetraamin, Tetraethylenpentamin, Dipropylentriamin, Tripropylentetramin, Tetrapropylenpentamin und Dibutylentriamin. Bevorzugt ist besonders Diethylentriamin.
Weiterhin als Vernetzerkomponente geeignete Aminoverbindungen sind die in der EP-B- 203 296 beschriebenen Umsetzungsprodukte eines Amins, das neben der iminisierten (d.h. primäre Aminogruppe, die mit einem Aldehyd oder Keton mit nicht mehr als 10 C-Atomen blockiert ist) primären Aminogruppe noch OH-, NH- oder SH-Gruppen enthält, mit einem Monoisocyanat, Monoepoxid oder einer monofunktionellen α,β-ungesättigten Carbonylverbindung. Für nähere Einzelheiten wird auf die EP-B- 203 296 verwiesen. Bevorzugt werden zur Herstellung dieser Komponente cycloaliphatische Amine mit 5 bis 15 C-Atomen, wie z.B. Isophorondiamin, 4,4′-Dicyclohexylmethandiamin und 3,3′-Dimethyl-4,4′Dicyclohexylmethandiamin eingesetzt. Als Vernetzer geeignet sind außerdem Umsetzungsprodukte von Alkanolaminen, Mercaptylaminen oder primären Aminen, die außerdem noch eine NH-Gruppe haben, mit Di- und Polyisocyanaten, Di- und Polyepoxiden und α,β-ungesättigten Carbonylverbindungen.

Als Di- oder Polyisocyanate sind beispielsweise geeignet: Aromatische Isocyanate, wie z.B. 2,4-, 2,6-Toluylendiisocyanat und deren Gemische, 4,4′-Diphenylmethandiisocyanat, m-Phenylen-, p-Phenylen-, 4,4-Diphenyl-, 1,5-Naphthalin-, 1,4-Naphthalin-, 4,4′-Toluidin-, Xylylendiisocyanat sowie substituierte aromatische Systeme, wie z.B. Dianisidindiisocyanate, 4,4′-Diphenyletherdiisocyanate oder Chlorodiphenylendiisocyanate und höherfunktionelle aromatische Isocyanate, wie z.B. 1,3,5-Triisocyanatobenzol, 4,4′,4″-Triisocyanattriphenylmethan, 2,4,6-Triisocyanatotoluol und 4,4′-Diphenyldimethylmethan-2,2′, 5,5′-tetraisocyanat; cycloaliphatische Isocyanate, wie z.B. 1,3-Cyclopentan-, 1,4-Cyclohexan-, 1,2-Cyclohexan- und Isophorondiisocyanat; aliphatische Isocyanate, wie z.B. Trimethylen-, Tetramethylen-, Pentamethylen-, Hexamethylen-, Trimethylhexamethylen-1,6-diisocyanat und Trishexamethylen-triisocyanat.

Beispiele für geeignete α,β-ungesättigte Carbonylverbindungen sind u.a. α,β-ungesättigte Dicarbonsäuren oder deren Ester, z.B. Malein- und Fumarsäure.
Für weitere Einzelheiten von als Vernetzerkomponente geeigneten Aminaddukten wird auf die EP-B- 203 296 verwiesen.

Wie bereits erwähnt, werden die oben genannten Amine in Form der iminisierten Verbindungen in den erfindungsgemäßen Zusammensetzungen eingesetzt, d.h. die primären Aminogruppen werden durch Umsetzung mit einem Aldehyd oder Keton mit nicht mehr als 10 C-Atomen, vorzugsweise 3 - 8 C-Atome, blockiert. Bevorzugt werden Ketone eingesetzt. Beispiele für geeignete Aldehyde und Ketone sind Aceton, Methylethylketon, Diethylketon, Methylisopropylketon, Methylisobutylketon, Isobutyraldehyd, 2-Pentanon, Cyclohexanon, Ethylamylketon, Diisobutylketon, 3-Octanon und Decanon. Ganz besonders bevorzugt werden Methylisobutylketon und Ethylamylketon eingesetzt.Diese Blockierungsreaktion ist bekannt (vgl. EP-B- 203 296) und braucht nicht näher beschrieben zu werden.

Selbstverständlich kann auch die Vernetzerkomponente, die als Michael-Donator dient, auf einem nach dem erfindungsgemäßen Verfahren hergestellten vinylesterhaltigen Copolymerisat basieren. Derartige aminogruppenhaltige Vernetzer werden hergestellt, indem zunächst - wie beschrieben - ein Copolymerisat (A) hergestellt wird, wobei als Komponente $a_3$ Alkylester von α,β-ungesättigten Carbonsäuren eingesetzt wer-den. Dieses alkylestergruppenhaltige Copolymerisat (A) wird dann durch Umsetzung mit Polyaminen in das entsprechende aminogruppenhaltige Copolymerisat überführt. Schließlich erfolgt eine Aldiminisierung bzw. Ketiminisierung der Aminogruppen wie oben beschrieben.
Derartige aminogruppenhaltige Polymerisate sind in der noch nicht veröffentlichten Patentanmeldung DE 38 27 587 beschrieben.

Weiterhin als Vernetzungsmittel geeignet sind auch Umsetzungsprodukte aus 1 Mol Maleinsäuredialkylester mit 3 Mol Diamin.
Andere geeigenete Di- oder Polyamine sind Polyamidharze, beispielsweise Kondensationsprodukte aus dimerisierten Fettsäuren und difunktionellen Aminen, wie beispielsweise Ethylendiamin. Weitere Aminogruppen enthaltende Polymere schließen Acrylatharze, Polyesterharze und Polyurethanharze ein.
Als Vernetzer für anhydridgruppenhaltige Copolymerisate (C) geeignet sind außerdem die in der DE-OS- 37 10 963 und die in der DE-OS 37 26 264 genannten aminfunktionellen Verbindungen.

Wenn das erfindungsgemäße Copolymerisat (C) als vernetzbare Gruppen ethylenisch ungesättigte Doppelbindungen enthält (Michael-Akzeptor), so können als Vernetzerkomponente außer den genannten aminfunktionellen Verbindungen auch andere Michael-Donatoren eingesetzt werden, wie beispielsweise die in der DE-OS 37 10 431 und EP-A-160824 beschriebenen Verbindungen die mindestens zwei Gruppen mit aktiven Wasserstoffatomen oder mindestens ein aktives Wasserstoffatom und mindestens eine Gruppe mit einem aktiven Wasserstoffatom enthalten, beispielsweise auf der Basis von acetoacetatgruppenhaltigen Verbindungen oder anderen C-H-aciden Verbindungen, beispielsweise auf Basis von Cyanessigsäure, Malonsäure, Cyclopentanoncarbonsäure, Cyclohexanoncarbonsäure sowie der jeweiligen Alkylester.
Selbstverständlich kann auch in diesem Fall die Vernetzerkomponente auf einem nach dem erfindungsgemäßen Verfahren hergestellten vinylesterhaltigen Copolymerisat basieren. Derartige Vernetzerkomponenten können beispielsweise dadurch hergestellt werden, daß zunächst nach dem erfindungsgemäßen Verfahren ein carboxylgruppenhaltiges Copolymerisat hergestellt wird, das in einer zweiten Stufe mit Verbindungen umgesetzt wird, die Umsetzungsprodukte eines Polyepoxids mit n Mol Epoxigruppen und (n-1) Mol einer Verbindung mit Carboxyl- oder Aminogruppen und der Gruppe mit aktivem Wasserstoff darstellen. Als Beispiel hierfür sei das Umsetzungsprodukt aus 1 Mol Trimethylolpropantriglycidylether und 2 Mol Cyanessigsäure oder 2 Mol Acetessigsäure genannt.

Enthält das Copolymerisat (C) als vernetzbare Gruppe Epoxidgruppen, so sind außer den bereits aufgeführten Härtern mit Aminogruppen oder den Härtern mit aktivem Wasserstoff auch säurefunktionelle Härter, beispielsweise auf der Basis von carboxylgruppenhaltigen Polyestern und/oder carboxylgruppenhaltigen Copolymerisaten geeignet. Auch in diesem Fall kann der Härter auf einem nach dem erfindungsgemäßen Verfahren hergestellten Copolymerisat basieren, wobei in diesem Fall als Komponente $a_3$ carboxylgruppenhaltige Monomere eingesetzt werden. Es ist auch möglich, derartige carboxylgruppenhaltige Härter mit Hilfe des zweistufigen Verfahrens herzustellen, indem das Copolymerisat (A) mit funktionellen Gruppen mit Verbindungen umgesetzt wird, die neben einer mit der funktionellen Gruppe der Komponente $a_3$ reaktiven Gruppe noch mindestens eine Carboxylgruppe enthalten. Derartige carboxylgruppenhaltige Copolymerisate sind in der noch nicht veröffentlichten Patentanmeldung DE 39 18 669 beschrieben.

Die Umsetzung der epoxidgruppenhaltigen Copolymerisate mit säurefunktionellen Härtern kann ggf. in Gegenwart eines Vernetzungskatalysators erfolgen. Hierbei eignen sich besonders tertiäre Amine, quartäre Ammoniumverbindungen, wie z.B. Benzyltrimethylammoniumhydroxid und Benzyltrimethylammoniumchlorid. Vorzugsweise wird der Vernetzungskatalysator in einer Menge von 0,5 bis 10 Gew.-%, bezogen auf das Gewicht der Epoxidkomponente, verwendet.

Statt der Zugabe eines externen Vernetzungskatalysators ist es auch möglich, tertiäre Aminogruppen in das Copolymerisat (C) oder den Vernetzer einzubauen, indem bei der Herstellung dieser Verbindungen entsprechende Monomereneinheiten mit tertiären Aminogruppen mitverwendet werden. Diese Variante der internen Katalyse ist allgemein bekannt und muß daher hier nicht näher erläutert werden.

Durch den Einsatz eines internen oder externen Vernetzungskatalysators werden niedrigere Einbrenntemperaturen und oder kürzere Einbrennzeiten erreicht. Dies ist insbesondere im Bereich der Autoreparaturlackierung von Bedeutung.

Enthalten die Copolymerisate (C) als funktionelle Gruppen cyclische Anhydridgruppen, so sind als Vernetzer alle Verbindungen geeignet, die mindestens eine zur Reaktion mit Anhydriden befähigte Gruppe enthalten. So können als Vernetzer beispielsweise hydroxylgruppenhaltige Verbindungen eingesetzt werden, die mit den anhydridgruppenhaltigen Copolymerisaten zunächst zu den Halbestern mit einer freien Säurefunktion reagieren. Diese Säurefunktion kann dann beispielsweise mit einer anderen, mindestens eine Epoxidgruppe enthaltenden Verbindung oder mit einer ggf. im gleichen Molekül enthaltenen Epoxidgruppe weiterreagieren. Dieses vermindert die Zahl der im Lack vorliegenden freien Säuregruppen und führt aufgrund des höheren Vernetzungsgrades zu witterungsbeständigen Beschichtungen.

Beispiele für geeignete epoxidgruppenhaltig Vernetzer sind Kondensationsprodukte aus Epichlorhydrin und Bisphenol A, cycloaliphatische Bisepoxide, die den Formeln (I) und (II) entsprechen:

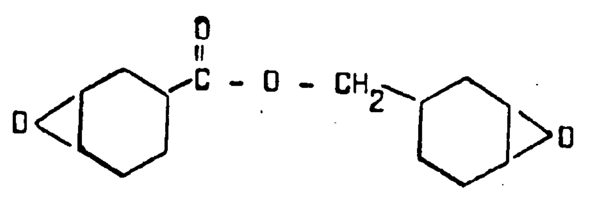

(I)

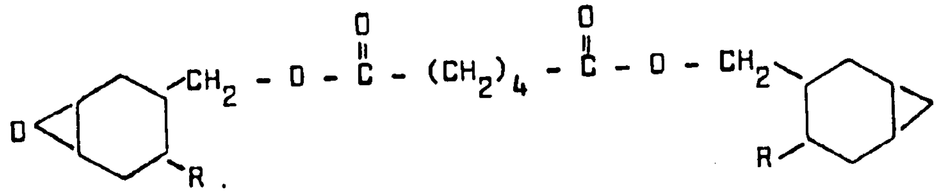

(II)

R = H, $CH_3$

sowie epoxidierte Polybutadiene, die durch Reaktion von handelsüblichen Polybutadienölen mit Persäuren bzw. organischen Säure-$H_2O_2$-Mischungen entstehen, epoxidgruppenhaltige Novolake, Glycidylether eines mehrwertigen Alkohols, z.B. Ethylenglykoldiglycidylether, Glycerinpolyglycdylether, Sorbitolpolyglycidylether, Trimethylolpropanpolyglycidylether und Pentaerythritpolyglycidylether und niedermolekulare Acrylatharze mit seitenständigen Oxirangruppen.

Als epoxidgruppenhaltige Vernetzer geeignet sind auch die bereits beschriebenen, erfindungsgemäßen epoxidgruppenhaltigen Copolymerisate (C). Ggf. kann für die Reaktion der Säuregruppen mit den Epoxidgruppen des Vernetzers ein Vernetzungskatalysator eingesetzt werden. Beispiele für geeignete Verbindungen sind die bereits auf Seite 33 der vorliegenden Beschreibung aufgeführten Katalysatoren.

Die zur besseren Pigmentbenetzung notwendige Säurezahl sowie die zur Vernetzungsoptimierung dienenden Säurefunktionen können nicht nur in dem Copolymerisat (C) enthalten sein, sondern sie können auch in der hydroxylgruppenhaltigen Vernetzerkomponente eingeführt worden sein, indem ein Teil der Hydroxylgruppen der Vernetzungskomponente mit einem Anhydrid umgesetzt wurde und dieses Umsetzungsprodukt als Vernetzer eingesetzt wird.

Die erfindungsgemäßen Beschichtungsmittel können außerdem noch übliche Pigmente und Füllstoffe in üblichen Mengen, bevorzugt 0 bis 60 Gew.-%, bezogen auf die Gesamtzusammensetzung sowie weitere übliche Hilfsund Zusatzstoffe, wie z.B. Verlaufsmittel, Silikonöle, Weichmacher wie Phosphorsäureester und Phthalsäureester, viskositätskontrollierende Zusätze, Mattierungsmittel, UV-Absorber und Lichtschutzmittel in üblichen Mengen, bevorzugt 0,2 bis 10 Gew.-%, bezogen auf die Gesamtzusammensetzung, enthalten.

Diese Beschichtungsmittel können durch Spritzen, Fluten, Tauchen, Walzen, Rakeln oder Streichen auf ein Substrat in Form eines Films aufgebracht werden, wobei der Film anschließend zu einem festhaftenden Überzug gehärtet wird.

Die erfindungsgemäßen Beschichtungsmittel eignen sich - wenn durch entsprechende Wahl der Härterkomponente niedrige Härtungstemperaturen zwischen Umgebungstemperatur und 80°C angewandt werden können (s.o.) - für die Reparaturlackierung von Kraftfahrzeugen sowie insbesondere für die Verwendung als Grundierung und Füllermaterial.

Die Erfindung wird in den folgenden Beispielen näher erläutert. Alle Angaben über Teile und Prozentsätze sind Gewichtsangaben, falls nicht ausdrücklich etwas anderes festgestellt wird.

I. Herstellung verschiedener Copolymerisatlösungen (C)

Die Herstellung der Copolymerisatlösungen erfolgt in einem 4 1-Edelstahlkessel mit Rührer, Rückflußkühler und Zulaufeinrichtungen. Als Vorlage werden jeweils die Lösungsmittel und variable Mengen eines handelsüblichen Gemisches von Vinylestern von gesättigten aliphatischen Monocarbonsäuren mit überwiegend 10 C-Atomen, die am $\alpha$-C-Atom verzweigt sind (Handelsprodukt VeoVa 10 der Firma Shell) vorgelegt und auf 170°C aufgeheizt. Das als Lösungsmittel eingesetzte Shellsol® A ist ein handelsübliches Gemisch von C3-C4 alkylsubstituierten Aromaten. Die Viskosität der erhaltenen Copolymeri- satlösungen wurde bei 23°C mit einem ICI Platte/-Kegel-Viskosimeter gemessen.

**Copolymerisatlösung 1**

In den Kessel werden eingewogen und vermischt:

| | |
|---|---|
| 271,0 Teile | Shellsol® A |
| 300,0 Teile | VeoVa 10 |

In den Monomerzulauf I werden eingewogen und vermischt:

| | |
|---|---|
| 150,0 Teile | Methylmethacrylat |
| 210,0 Teile | n-Butylacrylat |
| 390,0 Teile | Hydroxiethylmethacrylat |

In den Monomerzulauf II werden eingewogen und vermischt:

| | |
|---|---|
| 450,0 Teile | Styrol |
| 22,5 Teile | Mercaptoethanol |

In den Initiatorzulauf werden eingewogen und vermischt

| | |
|---|---|
| 36,0 Teile | di-tert.-Butylperoxid |
| 108,0 Teile | Shellsol® A |

Der Monomerentank I wird innerhalb von 4,5 Stunden gleichmäßig zudosiert. Der Monomerentank II wird innerhalb von 4,5 h so dosiert, daß in den ersten 90 Minuten 25 % der Gesamtmenge, von der 91.ten bis zur 180.ten Minute der Gesamtlaufzeit 35 % der Gesamtmenge und in der restlichen Zulaufzeit 40 % der Gesamtmenge Styrol zudosiert werden. Während des Zulaufs wird die Temperatur im Kessel bei 165 - 170°C gehalten. Nach Beendigung der Zuläufe werden innerhalb von 1 h nochmals

3,8 Teile di-tert.-Butylperoxid
11,3 Teile Shellsol® A

aus dem Initiatortank dosiert. Danach wird noch weitere 2 h bei dieser Temperatur nachpolymerisiert. Der nichtflüchtige Anteil (1 h 130°C) dieser Copolymerisatlösung 1 beträgt 80 %, die Viskosität der 60 %igen Lösung in Butylacetat beträgt 4,0 dPa.s.

Der Gehalt an freiem Vinylester-Monomer VeoVa 10 in der Copolymerisatlösung 1 wurde gaschromatographisch bestimmt. Es wurde ein Gehalt an freiem Vinylester-Monomer von 1,2 % gefunden. Umgerechnet auf die Gesamtmenge an eingesetztem Vinylester ergibt sich somit unter Berücksichtigung des Festkörpergehaltes der Copolymerisatlösung 1 ein Anteil von 7,5 % an nicht umgesetztem Vinylester.

**Copolymerisatlösung 2:**

In den Kessel werden eingewogen und vermischt:

251,0 Teile Shellsol® A
300,0 Teile VeoVa 10

In den Monomerzulauf I werden eingewogen und vermischt:

75,0 Teile Methylmethacrylat
225,0 Teile n-Butylacrylat
450,0 Teile Acetoacetoxiethylmethacrylat

In den Monomerzulauf II werden eingewogen und vermischt:

450,0 Teile Styrol
6,0 Teile Mercaptoethanol

In den Initiatorzulauf werden eingewogen und vermischt

52,6 Teile Dicumylperoxid
122,8 Teile Shellsol® A

Der Monomerentank I wird innerhalb von 4,5 Stunden gleichmäßig zudosiert. Der Monomerentank II wird innerhalb von 4,5 h so dosiert, daß in den ersten 90 Minuten 25 % der Gesamtmenge, von der 91.ten bis zur 180.ten Minute der Gesamtzulaufzeit 35 % der Gesamtmenge und in der restlichen Zulaufzeit 40 % der Gesamtmenge Styrol zudosiert werden. Während des Zulaufs wird die Temperatur im Kessel bei 165 - 170°C gehalten. Nach Beendigung der Zuläufe werden innerhalb von 1 h nochmals

5,9 Teile Dicumylperoxid
13,7 Teile Shellsol® A

aus dem Initiatortank dosiert. Danach wird noch weitere 2 h bei dieser Temperatur nachpolymerisiert. Danach wird mit 277 Teilen Xylol angelöst. Der nichtflüchtige Anteil (1 h 130°C) dieser Copolymerisatlösung 2 beträgt 70 %, die Viskosität der Lösung (60 % in Butylacetat) beträgt 1,30 dPa.s der Restgehalt an freiem Vinylester liegt bei 1,2 %, bezogen auf die Copolymerlösung 2, entsprechend 8,78 %, bezogen auf Vinylestergehalt und Festkörper der Lösung.

**Copolymerisatlösung 3:**

Zu 770 Teilen der Copolymerisatlösung 1 werden in einem 4 l-Edelstahlkessel mit Rührer und Rückflußkühler 128 Teile Acetessigsäureethylester gegeben. Die Lösung wird 5 h bei 80 - 90°C gehalten, anschließend wird über eine Destillationsvorrichtung das freigewordene Ethanol bei ca. 115°C bis 165°C unter Normaldruck abdestilliert. Das restliche Ethanol wird dann über eine Vakuumdestillation zusammen mit Shellsol A abdestilliert. Mit Xylol wird dann von einem Festkörper vo 81 % auf 70 % und mit n-Butylacetat auf 65 % herunterverdünnt. Die so erhaltene Copolymerisatlösung 3 hat eine Viskosität von 4,4 dPas und einen nichtflüchtigen Anteil von 63,5 %.

**Copolymerisatlösung 4**

In den Kessel werden eingewogen und vermischt:

473,0 Teile Shellsol® A
486,0 Teile VeoVa 10

In den Monomerzulauf I werden eingewogen und vermischt:

194,0 Teile Methylmethacrylat
341,0 Teile n-Butylacrylat

680,0 Teile Glycidylmethacrylat

In den Monomerzulauf II werden eingewogen und vermischt:

729,0 Teile Styrol

12,2 Teile Mercaptoethanol

In den Initiatorzulauf werden eingewogen und vermischt:

43,7 Teile di-tert.-Butylperoxid

131,0 Teile Shellsol® A

Der Monomertank I wird innerhalb von 4,5 Stunden gleichmäßig zudosiert. Der Monomerentank II wird innerhalb von 4,5 h so dosiert, daß in den ersten 90 Minuten 25 % der Gesamtmenge, von der 91.ten bis zur 180.ten Minute der Gesamtlaufzeit 35 % der Gesamtmenge und in der restlichen Zulaufzeit 40 % der Gesamtmenge Styrol zudosiert werden. Während des Zulaufs wird die Temperatur im Kessel bei 165 - 170°C gehalten. Nach Beendigung der Zuläufe werden innerhalb von 1 h nochmals

6,1 Teile di-tert.-Butylperoxid

18,5 Teile Shellsol® A

aus dem Initiatortank zudosiert. Danach wird noch weitere 2 h bei dieser Temperatur nachpolymerisiert. Danach wird mit 443 Teilen Xylol angelöst. Der nichtflüchtige Anteil (1 h 130°C) dieser Copolymerisatlösung 4 beträgt 70 %, die Viskosität der Lösung (60 % in Butylacetat) beträgt 3,10 dPa.s.

Restgehalt an freiem Vinylester: 0,83, bezogen auf die Copolymerisatlösung 4, entsprechend 5,9 %, bezogen auf Vinylestergehalt und Festkörper der Lösung.

**Copolymerisatlösung 5**

In einem 4 l-Edelstahlkessel mit Rührer und Rückflußkühler werden zu 1173 Teilen der Copolymerisatlösung 4 105,6 Teile Acrylsäure, 1 Teil p-di-tert. Butylkresol, 0,05 Teile Phenothiazin und 0,5 Teile Triphenylphosphin gegeben. Bei einer Temperatur von 110°C wird bis zu einer Säurezahl von 2 mgKOH/g gerührt. Dann werden nochmals 5,3 Teile Acrylsäure zugegeben und weitere 3 h bei der angegebenen Temperatur gerührt bis eine Säurezahl von 2 mgKOH/g und ein Epoxidäquivalentgewicht von ca. 19000 erreicht sind. Die Copolymerlösung wird mit Butylacetat auf einen Festkörper von 60 % eingestellt. Die Copolymerisatlösung 5 hat eine Viskosität von 6,8 dPas, gemessen bei 23°C.

**Copolymerisatlösung 6**

In den Kessel werden eingewogen und vermischt:

336,4 Teile Shellsol® A

360,0 Teile VeoVa 10

In den Monomerzulauf I werden eingewogen und vermischt:

144,0 Teile Ethylacrylat

360,0 Teile n-Butylacrylat

360,0 Teile Maleinsäureanhydrid

In den Monomerzulauf II werden eingewogen und vermischt:

540,0 Teile Styrol

69,0 Teile tert. Dodecylmercaptan

In den Initiatorzulauf werden eingewogen und vermischt:

43,2 Teile di-tert.-Butylperoxid

129,6 Teile Shellsol® A

Der Monomertank I wird innerhalb von 4,5 Stunden gleichmäßig zudosiert. Der Monomerentank II wird innerhalb von 4,5 h so dosiert, daß in den ersten 90 Minuten 25 % der Gesamtmenge, von der 91.ten bis zur 180.ten Minute der Gesamtlaufzeit 35 % der Gesamtmenge und in der restlichen Zulaufzeit 40 % der Gesamtmenge Styrol zudosiert werden. Während des Zulaufs wird die Temperatur im Kessel bei 165 - 170°C gehalten. Nach Beendigung der Zuläufe werden innerhalb von 1 h nochmals

4,5 Teile di-tert.-Butylperoxid

13,5 Teile Shellsol® A

aus dem Initiatortank dosiert. Danach wird noch weitere 2 h bei dieser Temperatur nachpolymerisiert. Der nichtflüchtige Anteil (1 h 130°C) dieser Copolymerisatlösung 6 beträgt 80 %, die Viskosität der 60 %igen Lösung in Xylol beträgt 6,20 dPa.s.

Vergleichsbeispiel:

Analog zu der Verfahrensvorschrift gemäß der englischsprachigen technischen Information "VeoVa polymers LR 40 and LR 2041 for water-thinnable paints" der Firma Shell wurde folgendermaßen eine acetoacetatfunktionelle Copolymerisatlösung hergestellt:

In einem 4-Liter-Edelstahlkessel mit Rührer, Rückflußkühler und Zulaufeinrichtungen werden 147 Teile Solventnaphtha®, 165 Teile 1-Methoxipropylacetat-2, 264 Teile eines handelsüblichen Gemisches von Vinylestern von gesättigten aliphatischen Monocarbonsäuren mit überwiegend 10 C-Atomen, die am α-C-Atomen verzweigt sind, 60 Teile Styrol und 2,4 Teile Di-tert. Butylperoxid vorgelegt und auf 160°C aufgeheizt.

In den Monomerentank werden eingewogen und vermischt:

| | |
|---|---|
| 540,- Teile | Styrol |
| 194,4 Teile | Acetoacetoxiethylmethacrylat |
| 108,- Teile | Methylmethycrylat |

In den Initiatortank werden eingewogen und vermischt:

| | |
|---|---|
| 21,6 Teile | tert. Butylperbenzoat |
| 64,8 Teile | Solventnaphtha® |
| 2,4 Teile | Dodecylmercaptan |

Monomeren- und Initiatortank werden innerhalb 4,5 h gleichmäßig zudosiert, die Temperatur wird auf 155 - 160°C gehalten. Danach werden innerhalb von 0,5 h

| | |
|---|---|
| 21,6 Teile | Acetoacetoxiethylmethacrylat |
| 12,- Teile | Methylmethacrylat |

aus dem Monomerentank und

| | |
|---|---|
| 10,8 Teile | Solventnaptha® |
| 3,6 Teile | tert. Butylperbenzoat |

aus dem Initiatortank zugegeben.

0,5 h nach dieser Nachdosierung werden nochmals

| | |
|---|---|
| 25,2 Teile | Solventnaphtha® |
| 8,4 Teile | tert, Butylperbenzoat |

aus dem Initiatortank innerhalb 0,5 h zudosiert. Nach 0,5 h Nachpolymerisation wird mit 253,8 Teilen Butylacetat angelöst.

Die so erhaltene Copolymerisatlösung 7 hatte einen Festkörper (1 h 130°C) von 62,3 % und eine Viskosität von 2,05 dPa.s (50 %ig in Methoxipropylacetat) bei 23°C). Mittels Gaschromatographie wurde unter gleichen Bedingungen wie bei der Copolymerisatlösung 2 der Restgehalt an freiem Vinylester-Monomeren in der 62,3 %igen Polymerisatlösung bestimmt. Es wurde ein Gehalt von 3,45 Gew.-% gefunden. Dies entspricht einem Restmonomerengehalt von 24 Gew.-%, bezogen auf die Gesamtmenge an eingesetztem Vinylester unter Berücksichtigung des theoretischen Festkörpers der Polymerisatlösung von 65 %.

## II. Herstellung eines Ketiminvernetzers

In einem 2-Liter Glaskessel wird eine Lösung von 232 Teilen eines Ketimins aus Ethylamylketon (5-metyl-3-heptanon) und Diethylentriamin, gelöst in 84 Teilen Ethylamylketon vorgelegt. Zu dieser Lösung wird eine Lösung von 228 Teilen eines trimerisierten Isophorondiisocyantes in 45,6 Teilen Xylol und 45,6 Teilen 1-Methoxipropylacetat-2 innerhalb von 120 Minuten zugetropft. Die Reaktionstemperatur wird bei 35-40°C gehalten. Die Mischung wird weitere 3 h bei 35°C gehalten, bis die infrarotspektroskopische Untersuchung der Reaktionsmischung kein freies Isocyanat mehr zeigt. Anschließend werden 13,0 Teile Methoxipropanol zugesetzt. Die so erhaltene Ketiminlösung hat einen Festkörper von 57 % (60 min, 130°C) und eine Viskosität von 6,4 dPas (bei 23°C).

## Beispiel 1

25 Teile der Copolymerisatlösung 2, 6,75 Teile eines handelsüblichen alkoxilierten Tetraacrylates mit einem zahlenmittleren Molekulargewicht von 560 (Tetraacrylat XP 5105 der Firma H. Rahn & Co., Zürich) und 1,19 Teile einer 20 %igen Lösung von 1,8-Diazabixyclo[5.4 .0.]undec-7-en in Butylacetat werden gemischt und mit Butylacetat auf eine Verarbeitungsviskosität von 20 s, gemessen im DIN 4 Auslaufbecher bei 23°C, eingestellt. Der so erhaltene Klarlack 1 wird mit einer Naßfilmstärke von 100 µm auf eine Glasplatte aufgezogen. Die Lackeigenschaften werden nach Vernetzung bei Raumtemperatur, 2 h nach forcierter Trocknung (30 min. bei 60°C) und 2 h nach Einbrennen (30 min. bei 100°C) geprüft. Beurteilt wird die Härte der Filme durch die pendelhärteprüfung nach König und der Vernetzungsgrad über die Superbenzinfestigkeit. Die Superbenzinfestigkeit wird mittels eines Filzplättchens, das mit Superbenzin getränkt wird und abgedeckt für drei Minuten auf den Klarlack gelegt wird, gemessen. Die Bewertung erfolgt durch Noten von 0 - 3 in halbzahligen Schritten. Beurteilt wird die Erweichung und die Markierung des Lackes. 0/0 bedeutet keine Markierung/keine Erweichung, 3/3 bedeutet starke Markierung/starke Erweichung.

Es werden folgende Prüfergebnisse erhalten:

Pendeldämpfung:

| | |
|---|---|
| 30'/100°C und 3 Tage bei Raumtemperatur: | 32 s |
| 30'/ 60°C und 3 Tage bei Raumtemperatur: | 144 s |
| 4 Tage bei Raumtemperatur: | 98 s |

Benzinfestigkeit nach 10 Tagen bei Raumtemperatur: 1/1.

<u>Beispiel 2</u>

Es wird analog Beispiel 1 ein Klarlack 2 durch Vermischen von

| | |
|---|---|
| Copolymerisatlösung 2 | 25 Teile |
| Copolymerisatlösung 5 | 47,8 Teile |
| Triphenylphosphan (20 %ige Lösung in Xylol) | 2,3 Teile |

hergestellt und mit Butylacetat auf eine Verarbeitungsviskosität von 20 s, gemessen im DIN 4 Auslaufbecher bei 23°C, eingestellt. Die Applikation, Aushärtung und Prüfung der Beschichtung erfolgt analog Beispiel 1. Es werden folgende Prüfergebnisse erhalten:

Pendeldämpfung:

| | |
|---|---|
| 30'/60°C und 3 Tage bei Raumtemperatur: | 132 s |
| 4 Tage bei Raumtemperatur: | 106 s |

Benzinfestigkeit nach 7 Tagen bei Raumtemperatur: 0,5/0.

<u>Beispiel 3</u>

Es wird analog Beispiel 1 ein Klarlack 3 durch Vermischen von 50 Teilen der Copolymerisatlösung 2 und 6,3 Teilen des oben beschriebenen Ketiminvernetzers hergestellt und mit Butylacetat auf eine Verarbeitungsviskosität von 20 s, gemessen im DIN 4 Auslaufbecher bei 23°C, eingestellt.

Die Applikation, Aushärtung und Prüfung der Beschichtung erfolgt analog Beispiel 1. Es werden folgende Prüfergebnisse erhalten:

Pendeldämpfung:

30'/100°C und 3 Tage bei Raumtemperatur: 80 s
30'/ 60°C und 3 Tage bei Raumtemperatur: 87 s
4 Tage bei Raumtemperatur: 60 s

Benzinfestigkeit nach 10 Tagen bei Raumtemperatur: 0,5/1.

Beispiel 4

Es wird analog Beispiel 1 ein Klarlack 4 durch Vermischen von 50 Teilen der Copolymerisatlösung 5, 12,7 Teilen des oben beschriebenen Ketiminvernetzers und 2,0 Teilen einer 20 %igen Lösung von 1,8-Diazabicyclo[5.4.0]undec-7-en in Butylacetat hergestellt und mit Butylacetat auf eine Verarbeitungsviskosität von 20 s, gemessen im DIN 4 Auslaufbecher bei 23°C, eingestellt. Die Applikation, Aushärtung und Prüfung der Beschichtung erfolgt analog Beispiel 1. Es werden folgende Prüfergebnisse erhalten:

Pendeldämpfung:

30'/100°C und 3 Tage bei Raumtemperatur: 193 s
30'/ 60°C und 3 Tage bei Raumtemperatur: 105 s
4 Tage bei Raumtemperatur: 120 s

Benzinfestigkeit nach 5 Tagen bei Raumtemperatur: 0/0

## Patentansprüche

### Patentansprüche für folgende Vertragsstaaten : AT, BE, CH, DE, DK, FR, GB, GR, IT, LU, NL, SE

**1.** Mittels radikalischer Lösungspolymerisation herstellbares Copolymerisat (C) mit C-H-aciden Gruppen oder ethylenisch ungesättigten Doppelbindungen oder Epoxidgruppen oder cyclischen Anhydridgruppen oder Isocyanatgruppen als vernetzbare Gruppen auf der Basis von Vinylestern, Vinylaromaten, ethylenisch ungesättigten Monomeren mit mindestens einer funktionellen Gruppe und gegebenenfalls weiteren copolymerisierbaren Monomeren, dadurch gekennzeichnet, daß das Copolymerisat (C) einen Gehalt von im Mittel 1,25 bis 30 vernetzbaren Gruppen je Molekül und ein mittleres Molekulargewicht (Zahlenmittel) von 1500 bis 6000 aufweist und herstellbar ist, indem

A) durch radikalische Lösungspolymerisation bei Temperaturen von 130 bis 200° C von

$a_1$) 5 bis 25 Gew.-% eines oder mehrerer Vinylester von Monocarbonsäuren,

$a_2$) 10 bis 50 Gew.-% eines oder mehrerer vinylaromatischer Kohlenwasserstoffe,

$a_3$) 10 bis 40 Gew.-% eines oder mehrerer ethylenisch ungesättigter Monomeren mit mindestens einer funktionellen Gruppe und

$a_4$) 0 bis 40 Gew.-% anderer ethylenisch ungesättigter, copolymerisierbarer Monomerer, wobei die Summe der Komponenten $a_1$ bis $a_4$ jeweils 100 Gew.-% ergibt,

ein Copolymerisat synthetisiert worden ist, indem

1.) mindestens 60 Gew.-% der Gesamtmenge der Komponente $a_1$ vorgelegt werden,

2.) die Komponenten $a_2$ bis $a_4$ und der ggf. vorhandene Rest der Komponente $a_1$ innerhalb eines für alle Komponenten gleich langen Monomerenzugabezeitraumes so zudosiert werden, daß

i) die pro Zeiteinheit zugegebene Menge der Komponente $a_1$ innerhalb des Monomerenzugabezeitraumes konstant bleibt oder abnimmt,

ii) die pro Zeiteinheit zugegebene Menge der Komponenten $a_3$ und $a_4$ innerhalb des Monomerenzugabezeitraumes konstant bleibt und

iii) die innerhalb des ersten Drittels des Monomerenzugabezeitraumes zugegebene Menge der Komponente $a_2$ 15 bis 30 Gew.-% der Gesamtmenge der Komonente $a_2$, innerhalb des zweiten Drittels 25 bis 40 Gew.-% und innerhalb des letzten Drittels 35 bis 60 Gew.-% der Gesamtmenge der Komponente $a_2$ beträgt und

B) das in Stufe A erhaltene Copolymerisat gegebenenfalls mit Verbindungen (V) umgesetzt worden ist, die eine gegenüber den funktionellen Gruppen der Komponente $a_3$ reaktive Gruppe und mindestens eine C-H-acide Gruppe oder mindestens eine ethylenisch ungesättigte Doppelbindung oder mindestens eine Epoxidgruppe oder mindestens eine cyclische Anhydridgruppe oder mindestens eine Isocyanatgruppe als vernetzbare Gruppen enthalten,

wobei die vernetzbaren Gruppen dadurch in das Copolymerisat (C) eingeführt worden sind, daß als Komponente $a_3$ ethylenisch ungesättigte Monomere mit mindestens einer C-H-aciden Gruppe oder mindestens einer ethylenisch ungesättigten Doppelbindung oder mindestens einer Epoxidgruppe oder mindestens einer cyclischen Anhydridgruppe oder mindestens einer Isocyanatgruppe eingesetzt worden sind und/oder das in Stufe A erhaltene Copolymerisat mit Verbindungen (V) umgesetzt worden ist, die eine gegenüber den funktionellen Gruppen der Komponente $a_3$ reaktive Gruppe und mindestens eine C-H-acide Gruppe oder ethylenisch ungesättigte Doppelbindung oder Epoxidgruppe oder cyclische Anhydridgruppe oder Isocyanatgruppe als vernetzbare Gruppen enthalten.

2. Copolymerisat nach Anspruch 1, dadurch gekennzeichnet, daß es einen Gehalt von im Mittel 2 bis 15 vernetzbaren Gruppen je Molekül aufweist.

3. Copolymerisat nach Anspruch 1 oder 2, dadurch gekennzeichnet, daß es herstellbar ist unter Verwendung von 10 bis 19 Gew.-% eines oder mehrerer Vinylester von Monocarbonsäuren.

4. Copolymerisat nach einem der Ansprüche 1 bis 3, dadurch gekennzeichnet, daß als Komponente $a_1$ ein oder mehrere Vinylester von in $\alpha$-Stellung verzweigten Monocarbonsäuren mit 5 bis 15 C-Atomen je Molekül eingesetzt worden sind.

5. Copolymerisat nach einem der Ansprüche 1 bis 4, dadurch gekennzeichnet, daß als Komponente $a_1$ ein oder mehrere Vinylester von gesättigten aliphatischen Monocarbonsäuren mit 9 bis 11 C-Atomen, die am $\alpha$-C-Atom verzweigt sind, eingesetzt worden sind.

6. Copolymerisat nach einem der Ansprüche 1 bis 5, dadurch gekennzeichnet, daß es herstellbar ist unter Verwendung von 15 bis 35 Gew.-% der Komponente $a_3$.

7. Copolymerisat nach einem der Ansprüche 1 bis 6, dadurch gekennzeichnet, daß als Komponente $a_3$ Hydroxialkylester ethylenisch ungesättigter Carbonsäuren eingesetzt worden sind und die Verbindung (V) ausgewählt ist aus der Gruppe der ethylenisch ungesättigten Carbonsäuren oder der Alkylester von ethylenisch ungesättigten Carbonsäuren mit 1 bis 6 C-Atomen im Alkylrest.

8. Copolymerisat nach einem der Ansprüche 1 bis 6, dadurch gekennzeichnet, daß als Komponente $a_3$ Hydroxialkylester ethylenisch ungesättigter Carbonsäuren eingesetzt worden sind und die Verbindung (V) mindestens eine ethylenisch ungesättigte Doppelbindung und eine Isocyanatogruppe aufweist.

9. Copolymerisat nach einem der Ansprüche 1 bis 6, dadurch gekennzeichnet, daß als Komponente $a_3$ Hydroxialkylester ethylenisch ungesättigter Carbonsäuren eingesetzt worden sind und die Verbindung (V) ausgewählt ist aus der Gruppe der Alkoximethylgruppen enthaltenden Amide von $\alpha,\beta$-ungesättigten Carbonsäuren oder der Verbindungen, die der allgemeinen Formel

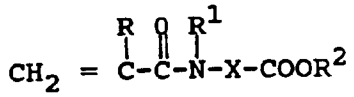

mit

$R = H, CH_3$
$R^1 = H$, Alkyl, Aryl
$R^2 =$ Alkyl

X = 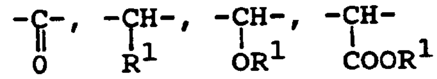

entsprechen.

**10.** Copolymerisat nach einem der Ansprüche 1 bis 6, dadurch gekennzeichnet, daß als Komponente $a_3$ Hydroxialkylester ethylenisch ungesättigter Carbonsäuren eingesetzt worden sind und die Verbindung (V) eine COOH- oder Alkylestergruppe mit 1 bis 6 C-Atomen im Alkylrest und mindestens ein aktives Wasserstoffatom enthält.

**11.** Copolymerisat nach einem der Ansprüche 1 bis 6, dadurch gekennzeichnet, daß als Komponente $a_3$ epoxidgruppenhaltige ethylenisch ungesättigte Monomere eingesetzt worden sind und die Verbindung (V) mindestens eine ethylenisch ungesättigte Doppelbindung und eine Carboxyl- oder Aminogruppe enthält.

**12.** Copolymerisat nach einem der Ansprüche 1 bis 6, dadurch gekennzeichnet, daß als Komponente $a_3$ isocyanatgruppenhaltige ethylenisch ungesättigte Monomere eingesetzt worden sind und die Verbindung (V) mindestens eine ethylenisch ungesättigte Doppelbindung und eine OH-, NH-, SH- oder COOH-Gruppe enthält.

**13.** Copolymerisat nach einem der Ansprüche 1 bis 6, dadurch gekennzeichnet, daß als Komponente $a_3$ Alkylester oder Aminoalkylester von ethylenisch ungesättigten Carbonsäuren mit 1 bis 6 C-Atomen im Alkylrest eingesetzt worden sind und die Verbindung (V) mindestens eine ethylenisch ungesättigte Doppelbindung und eine OH-, NH- oder SH-Gruppe enthält.

**14.** Copolymerisat nach einem der Ansprüche 1 bis 6, dadurch gekennzeichnet, daß als Komponente $a_3$ ethylenisch ungesättigte Carbonsäuren eingesetzt worden sind und die Verbindung (V) mindestens eine ethylenisch ungesättigte Doppelbindung und eine OH-, NH-, SH-, NCO- oder EpoxiGruppe enthält.

**15.** Copolymerisat nach einem der Ansprüche 1 bis 6, dadurch gekennzeichnet, daß als Komponente $a_3$ acetoacetatgruppenhaltige Monomere eingesetzt worden sind.

**16.** Copolymerisat nach einem der Ansprüche 1 bis 6, dadurch gekennzeichnet, daß als Komponente $a_3$ Alkoximethylgruppen enthaltende Amide α,β-ungesättigter Carbonsäuren oder Verbindungen der allgemeinen Formel

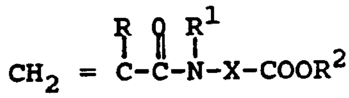

eingesetzt worden sind,
mit

$R = H, CH_3$
$R^1 = H$, Alkyl, Aryl
$R^2 =$ Alkyl

X = 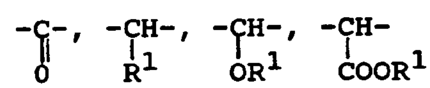

**17.** Copolymerisat nach Anspruch 16, dadurch gekennzeichnet, daß die Verbindung (V) mindestens eine ethylenisch ungesättigte Doppelbindung und eine OH-, NH- oder SH-Gruppe enthält.

**18.** Verfahren zur Herstellung der Copolymerisate nach einem der Ansprüche 1 bis 17 mittels radikalischer Lösungspolymerisation, dadurch gekennzeichnet, daß

A) die Monomeren $a_1$ bis $a_4$ bei Temperaturen von 130 bis 200°C durch radikalische Lösungspolymerisation zu einem Copolymerisat (A) umgesetzt werden, wobei

1.) mindestens 60 Gew.-% der Gesamtmenge der Komponente $a_1$ vorgelegt werden,
2.) die Komponenten $a_2$ bis $a_4$ und der gegebenenfalls vorhandene Rest der Komponente $a_1$ innerhalb eines für alle Komponenten gleich langen Monomerenzugabezeitraumes so zudosiert werden, daß

i) die pro Zeiteinheit zugegebene Menge der Komponente $a_1$ innerhalb des Monomerenzugabezeitraumes konstant bleibt oder abnimmt,
ii) die pro Zeiteinheit zugegebene Menge der Komponenten $a_3$ und $a_4$ innerhalb des Monomerenzugabezeitraumes konstant bleibt und
iii) die innerhalb des ersten Drittels des Monomerenzugabezeitraumes zugegebene Menge der Komponente $a_2$ 15 bis 30 Gew.-% der Gesamtmenge der Komonente $a_2$, innerhalb des zweiten Drittels 25 bis 40 Gew.-% und innerhalb des letzten Drittels 35 bis 60 Gew.-% der Gesamtmenge der Komponente $a_2$ beträgt und

B) das in Stufe A erhaltene Copolymerisat gegebenen falls mit Verbindungen (V) umgesetzt wird, die eine gegenüber den funktionellen Gruppen der Komponente $a_3$ reaktive Gruppe und mindestens eine C-H-acide Gruppe oder mindestens eine ethylenisch ungesättigte Doppelbindung oder mindestens eine Epoxidgruppe oder mindestens eine cyclische Anhydridgruppe oder mindestens eine Isocyanatgruppe als vernetzbare Gruppen enthalten,

wobei die vernetzbaren Gruppen dadurch in das Copolymerisat (C) eingeführt worden sind, daß als Komponente $a_3$ ethylenisch ungesättigte Monomere mit mindestens einer C-H-aciden Gruppe oder mindestens einer ethylenisch ungesättigten Doppelbindung oder mindestens einer Epoxidgruppe oder mindestens einer cyclischen Anhydridgruppe oder mindestens einer Isocyanatgruppe eingesetzt worden sind und/oder das in Stufe A erhaltene Copolymerisat mit Verbindungen (V) umgesetzt worden ist, die eine gegenüber den funktionellen Gruppen der Komponente $a_3$ reaktive Gruppe und mindestens eine C-H-acide Gruppe oder ethylenisch ungesättigte Doppelbindung oder Epoxidgruppe oder cyclische Anhydridgruppe oder Isocyanatgruppe als vernetzbare Gruppen enthalten.

**19.** Verfahren nach Anspruch 18, dadurch gekennzeichnet, daß 100 Gew.-% der Gesamtmenge der Komponente $a_1$ vorgelegt werden.

**20.** Verfahren nach Anspruch 18 oder 19, dadurch gekennzeichnet, daß die Monomeren bei Temperaturen von 150 bis 180°C polymerisiert werden.

**21.** Beschichtungsmittel, dadurch gekennzeichnet, daß es das vernetzbare Gruppen enthaltende Copolymerisat (C) nach einem der Ansprüche 1 bis 17 als Bindemittel enthält.

**22.** Verwendung der vernetzbaren Gruppen enthaltenden Copolymerisate (C) nach einem der Ansprüche 1 bis 17 in Beschichtungsmitteln für die Autoreparaturlackierung.

**23.** Verwendung der vernetzbare Gruppen enthaltenden Copolymerisate (C) nach einem der Ansprüche 1 bis 17 als Bindemittel in Klarlacken oder pigmentierten Decklacken.

**Patentansprüche für folgenden Vertragsstaat : ES**

**1.** Verfahren zur Herstellung von Copolymerisaten (C) mit C-H-aciden Gruppen oder ethylenisch ungesättigten Doppelbindungen oder Epoxidgruppen oder cyclischen Anhydridgruppen oder Isocyanatgruppen als vernetzbare Gruppen auf der Basis von Vinylestern, Vinylaromaten, ethylenisch ungesättigten Monomeren mit mindestens einer funktionellen Gruppe und gegebenenfalls weiteren copolymerisierbaren Monomeren mittels radikalischer Lösungspolymerisation, dadurch gekennzeichnet, daß das Copolymerisat (C) einen Gehalt von im Mittel 1,25 bis 30 vernetzbaren Gruppen je Molekül und ein mittleres Molekulargewicht (Zahlenmittel) von 1500 bis 6000 aufweist und hergestellt wird, indem

(A) durch radikalische Lösungspolymerisation bei Temperaturen von 130 bis 200 °C von

$a_1$) 5 bis 25 Gew.-% eines oder mehrerer Vinylester von Monocarbonsäuren,
$a_2$) 10 bis 50 Gew.-% eines oder mehrerer vinylaromatischer Kohlenwasserstoffe,
$a_3$) 10 bis 40 Gew.-% eines oder mehrerer ethylenisch ungesättigter Monomeren mit mindestens einer funktionellen Gruppe und
$a_4$) 0 bis 40 Gew.-% anderer ethylenisch ungesättigter, copolymerisierbarer Monomer, wobei die Summe der Komponenten $a_1$ bis $a_4$ jeweils 100 Gew.-% ergibt,

ein Copolymerisat synthetisiert wird, indem

1.) mindestens 60 Gew.-% der Gesamtmenge der Komponente $a_1$ vorgelegt werden,

2.) die Komponenyten $a_2$ bis $a_4$ und der ggf. vorhandene Rest der Komponente $a_1$ innerhalb eines für alle Komponenten gleich langen Monomerenzugabezeitraumes so zudosiert werden, daß

i) in pro Zeiteinheit zugegebene Menge der Komponente $a_1$ innerhalb des Monomerenzugabezeitraumes konstant bleibt oder abnimmt,

ii) die pro Zeiteinheit zugegebene Menge der Komponenten $a_3$ und $a_4$ innerhalb des Monomerenzugabezeitraumes konstant bleibt und

iii) die innerhalb des ersten Drittels des Monomerenzugabezeitraumes zugegebene Menge der Komponente $a_2$ 15 bis 30 Gew.-% der Gesamtmenge der Komponente $a_2$, innerhalb des zweiten Drittels 25 bis 40 Gew.-% und innerhalb des letzten Drittels 35 bis 60 Gew.-% der Gesamtmenge der Komponente $a_2$ beträgt und

B) das in Stufe A erhaltene Copolymerisat gegebenenfalls mit Verbindungen (V) umgesetzt wird, die eine gegenüber den funktionellen Gruppen der Komponente $a_3$ reaktive Gruppe und mindestens eine C-H-acide Gruppe oder mindestens eine ethylenisch ungesättigte Doppelbindung oder mindestens eine Epoxidgruppe oder mindestens eine cyclische Anhydridgruppe oder mindestens eine Isocyanatgruppe als vernetzbare Gruppen enthalten,

wobei die vernetzbaren Gruppen dadurch in das Copolymerisat (C) eingeführt werden, daß als Komponente $a_3$ ethylenisch ungesättigte Monomere mit mindestens einer C-H-aciden Gruppe oder mindestens einer ethylenisch ungesättigten Doppelbindung oder mindestens einer Epoxidgruppe oder mindestens einer cyclischen Anhydridgruppe oder mindestens einer Isocyanatgruppe eingesetzt werden und/oder das in Stufe A erhaltene Copolymerisat mit Verbindungen (V) umgesetzt wird, die eine gegenüber den funktionellen Gruppen der Komponente $a_3$ reaktive Gruppe und mindestens eine C-H-acide Gruppe oder ethylenisch ungesättigte Doppelbindung oder Epoxidgruppe oder cyclische Anhydridgruppe oder Isocyanatgruppe als vernetzbare Gruppen enthalten.

**2.** Verfahren nach Anspruch 1, dadurch gekennzeichnet, daß das Copolymerisat (C) einen Gehalt von im Mittel 2 bis 15 vernetzbaren Gruppen je Molekül aufweist.

**3.** Verfahren nach Anspruch 1 oder 2, dadurch gekennzeichnet, daß das Copolymerisat (C) hergestellt wird unter Verwendung von 10 bis 19-Gew.% eines oder mehrerer Vinylester von Monocarbonsäuren.

**4.** Verfahren nach einem der Ansprüche 1 bis 3, dadurch gekennzeichnet, daß als Komponente $a_1$ ein oder mehrere Vinylester von in $\alpha$-Stellung verzweigten Monocarbonsäuren mit 5 bis 15 C-Atomen je Molekül eingesetzt werden.

**5.** Verfahren nach einem der Ansprüche 1 bis 4, dadurch gekennzeichnet, daß als Komponente $a_1$ ein oder mehrere Vinylester von gesättigten aliphatischen Monocarbonsäuren mit 9 bis 11 C-Atomen, die am $\alpha$-C-Atom verzweigt sind, eingesetzt werden.

**6.** Verfahren nach einem er Ansprüche 1 bis 5, dadurch gekennzeichnet, daß das Copolymerisat (C) hergestellt wird unter Verwendung von 15 bis 35 Gew.-% der Komponente $a_3$.

**7.** Verfahren nach einem der Ansprüche 1 bis 6, dadurch gekennzeichnet, daß als Komponente $a_3$ Hydroxialkylester ethylenisch ungesättigter Carbonsäuren eingesetzt werden und die Verbindung (V) ausgewählt ist aus der Gruppe der ethylenisch ungesättigten Carbonsäuren oder der Alkylester von ethylenisch ungesättigten Carbonsäuren mit 1 bis 6 C-Atomen im Alkylrest.

**8.** Verfahren nach einem der Ansprüche 1 bis 6, dadurch gekennzeichnet, daß als Komponente $a_3$ Hydroxialkylester ethylenisch ungesättigter Carbonsäuren eingesetzt werden und die Verbindung (V) mindestens eine ethylenisch ungesättigte Doppelbindung und eine Isocyanatogruppe aufweist.

**9.** Verfahren nach einem der Ansprüche 1 bis 6, dadurch gekennzeichnet, daß als Komponente $a_3$ Hydroxialkylester ethylenisch ungesättigter Carbonsäuren eingesetzt werden und die Verbindung (V) ausgewählt ist aus der Gruppe der Alkoximethylgruppen enthaltenden Amide von $\alpha,\beta$- Carbonsäuren oder der Verbindungen, die der allgemeinen Formel

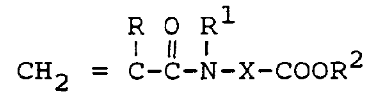

mit

R = H, $CH_3$
$R^1$ = H, Alkyl, Aryl
$R^2$ = Alkyl

X = 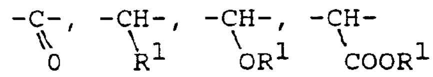

entsprechen.

**10.** Verfahren nach einem der Ansprüche 1 bis 6, dadurch gekennzeichnet, daß als Komponente $a_3$ Hydroxialkylester ethylenisch ungesättigter Carbonsäuren eingesetzt werden und die Verbindung (V) eine COOH- oder Alkylestergruppe mit 1 bis 6 C-Atomen im Alkylrest und mindestens ein aktives Wasserstoffatom enthält.

**11.** Verfahren nach einem der Ansprüche 1 bis 6, dadurch gekennzeichnet, daß als Komponente $a_3$ epoxidgruppenhaltige ethylenisch ungesättigte Monomere eingesetzt werden und die Verbindung (V) mindestens eine ethylenisch ungesättigte Doppelbindung und eine Carboxyl- oder Aminogruppe enthält.

**12.** Verfahren nach einem der Ansprüche 1 bis 6, dadurch gekennzeichnet, daß als Komponente $a_3$ isocyanatgruppenhaltige ethylenisch ungesättigte Monomere eingesetzt werden und die Verbindung (V) mindestens eine ethylenisch ungesättigte Doppelbindung und eine OH-, NH-, SH- oder COOH-Gruppe enthält.

**13.** Verfahren nach einem der Ansprüche 1 bis 6, dadurch gekennzeichnet, daß als Komponente $a_3$ Alkylester oder Aminoalkylester von ethylenisch ungesättigten Carbonsäuren mit 1 bis 6 C-Atomen im Alkylrest eingesetzt werden und die Verbindung (V) mindestens eine ethylenisch ungesättigte Doppelbindung und eine OH-, NH- oder SH-Gruppe enthält.

**14.** Verfahren nach einem der Ansprüche 1 bis 6, dadurch gekennzeichnet, daß als Komponente $a_3$ ethylenisch ungesättigte Carbonsäuren eingesetzt werden und die Verbindung (V) mindestens eine ethylenisch ungesättigte Doppelbindung und eine OH-, NH-, SH-, NCO- oder Epoxi-Gruppe enthält.

**15.** Verfahren nach einem der Ansprüche 1 bis 6, dadurch gekennzeichnet, daß als Komponente $a_3$ acetoacetatgruppenhaltige Monomere eingesetzt werden.

**16.** Verfahren nach einem der Ansprüche 1 bis 6, dadurch gekennzeichnet, daß als Komponente $a_3$ Alkoximethylgruppen enthaltende Amide α,β-ungesättigter Carbonsäuren oder Verbindungen der allgemeinen Formel

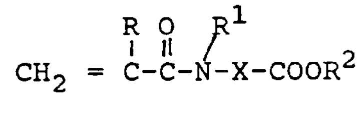

eingesetzt werden
mit

R = H, $CH_3$
$R^1$ = H, Alkyl, Aryl
$R^2$ = Alkyl

$$X = \begin{array}{cccc} -C-, & -CH-, & -CH-, & -CH- \\ \| & | & | & | \\ O & R^1 & OR^1 & COOR^1 \end{array}$$

**17.** Verfahren nach Anspruch 16, dadurch gekennzeichnet, daß die Verbindung (V) mindestens eine ethylenisch ungesättigte Doppelbindung und eine OH-, NH- oder SH-Gruppe enthält.

**18.** Verfahren nach einem der Ansprüche 1 bis 17, dadurch gekennzeichnet, daß 100 Gew.-% der Gesamtmenge der Komponente $a_1$ vorgelegt werden.

**19.** Verfahren nach einem der Ansprüche 1 bis 18, dadurch gekennzeichnet, daß die Monomeren bei Temperaturen von 150 bis 180 °C polymerisiert werden.

**20.** Verfahren zur Herstellung von Beschichtungsmitteln, dadurch gekennzeichnet, daß die Beschichtungsmittel das nach einem Verfahren nach einem der Ansprüche 1 bis 19 hergestellte, vernetzbare Gruppen enthaltende Copolymerisat (C) als Bindemittel enthalten.

**21.** Verwendung der nach einem Verfahren nach einem der Ansprüche 1 bis 19 hergestellten, vernetzbaren Gruppen enthaltenden Copolymerisate (C) in Beschichtungsmitteln für die Autoreparaturlackierung.

**22.** Verwendung der nach einem Verfahren nach einem der Ansprüche 1 bis 19 hergestellten, vernetzbare Gruppen enthaltenden Copolymerisate (C) als Bindemittel in Klarlacken oder pigmentierten Decklacken.

## Claims

### Claims for the following Contracting States : AT, BE, CH, DE, DK, FR, GB, GR, IT, LU, NL, SE

**1.** Copolymer (C) preparable by free-radical solution polymerization and containing acidic C-H groups or ethylenically unsaturated double bonds or epoxy groups or cyclic anhydride groups or isocyanate groups as crosslinkable groups, which copolymer is based on vinyl esters, vinyl aromatics, ethylenically unsaturated monomers containing at least one functional group and, if desired, further copolymerizable monomers, characterized in that copolymer (C) is a copolymer containing on average 1.25 to 30 crosslinkable groups per molecule and an average molecular weight (number average) of 1500 to 6000 and is preparable by

(A) synthesizing a copolymer by free-radical solution polymerization at temperatures of 130 to 200°C of

$a_1$) 5 to 25% by weight of one or more vinyl esters of monocarboxylic acids,
$a_2$) 10 to 50% by weight of one or more vinyl aromatic hydrocarbons,
$a_3$) 10 to 40% by weight of one or more ethylenically unsaturated monomers containing at least one functional group and
$a_4$) 0 to 40% by weight of other ethylenically unsaturated, copolymerizable monomers, the sum of components $a_1$ to $a_4$ amounting in each case to 100% by weight,

by

1.) initially introducing at least 60% by weight of the total amount of component $a_1$,
2.) metering in components $a_2$ to $a_4$ and any remainder of component $a_1$ over a monomer addition period which is of the same length for all components in such a manner that

i) the amount of component $a_1$ added per unit of time over the monomer addition period remains constant or decreases,
ii) the amount of components $a_3$ and $a_4$ added per unit of time over the monomer addition period remains constant and
iii) the amount of component $a_2$ added over the first third of the monomer addition period is 15 to 30% by weight of the total amount of component $a_2$, the amount added over the second third is 25 to 40% by weight and the amount added over the last third is 35 to 60% by weight of the total amount of component $a_2$ and

(B) the copolymer obtained in step A is, if desired, reacted with compounds (V) which contain a group

which is reactive towards the functional groups of component $a_3$ and at least one acidic C-H group or at least one ethylenically unsaturated double bond or at least one epoxy group or at least one cyclic anhydride group or at least one isocyanate group as crosslinkable groups,

in which the crosslinkable groups have been incorporated in copolymer (C) by using, as component $a_3$, ethylenically unsaturated monomers having at least one acidic C-H group or at least one ethylenically unsaturated double bond or at least one epoxy group or at least one cyclic anhydride group or at least one isocyanate group and/or reacting the copolymer obtained in step A with compounds (V) which contain a group which is reactive towards the functional groups of component $a_3$ and at least one acidic C-H group or ethylenically unsaturated double bond or epoxy group or cyclic hydride group or isocyanate group as crosslinkable groups.

2. Copolymer according to Claim 1, which contains on average 2 to 15 crosslinkable groups per molecule.

3. Copolymer according to Claim 1 or 2, which is preparable by using 10 to 19% by weight of one or more vinyl esters of monocarboxylic acids.

4. Copolymer according to one of Claims 1 to 3, characterized in that one or more vinyl esters of monocarboxylic acids branched at the $\alpha$ position and having 5 to 15 carbon atoms per molecule have been used as component $a_1$.

5. Copolymer according to one of Claims 1 to 4, characterized in that one or more vinyl esters of saturated aliphatic monocarboxylic acids having 9 to 11 carbon atoms which are branched at the $\alpha$-carbon atom have been used as component $a_1$.

6. Copolymer according to one of Claims 1 to 5, which is preparable by using 15 to 35% by weight of component $a_3$.

7. Copolymer according to one of Claims 1 to 6, characterized- in that hydroxyalkyl esters of ethylenically unsaturated carboxylic acids have been used as component $a_3$ and compound (V) is selected from the group comprising ethylenically unsaturated carboxylic acids or the alkyl esters of ethylenically unsaturated carboxylic acids having 1 to 6 carbon atoms in the alkyl radical.

8. Copolymer according to one of Claims 1 to 6, characterized in that hydroxyalkyl esters of ethylenically unsaturated carboxylic acids have been used as component $a_3$ and compound (V) has at least one ethylenically unsaturated double bond and one isocyanato group.

9. Copolymer according to one of claims 1 to 6, characterized in that hydroxyalkyl esters of ethylenically unsaturated carboxylic acids have been used as component $a_3$ and compound (V) is selected from the group comprising amides of $\alpha,\beta$-unsaturated carboxylic acids containing alkoxymethyl groups or from the compounds having the general formula

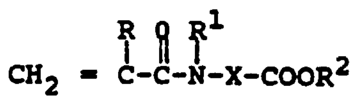

where

R is H, $CH_3$

$R^1$ is H, alkyl, aryl

$R^2$ is alkyl

X is 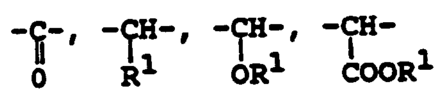

10. Copolymer according to one of Claims 1 to 6, characterized in that hydroxyalkyl esters of ethylenically unsaturated carboxylic acids have been used as component $a_3$ and compound (V) contains a COOH or alkyl ester group having 1 to 6 carbon atoms in the alkyl radical and at least one active hydrogen atom.

**11.** Copolymer according to one of claims 1 to 6, characterized in that epoxy-containing ethylenically unsaturated monomers have been used as component $a_3$ and compound (V) contains at least one ethylenically unsaturated double bond and one carboxyl or amino group.

**12.** Copolymer according to one of claims 1 to 6, characterized in that isocyanato-containing ethylenically unsaturated monomers have been used as component $a_3$ and compound (V) contains at least one ethylenically unsaturated double bond and one OH, NH, SH or COOH group.

**13.** Copolymer according to one of claims 1 to 6, characterized in that alkyl esters or aminoalkyl esters of ethylenically unsaturated carboxylic acids having 1 to 6 carbon atoms in the alkyl radical have been used as component $a_3$ and compound (V) contains at least one ethylenically unsaturated double bond and one OH, NH or SH group.

**14.** Copolymer according to one of Claims 1 to 6, characterized in that ethylenically unsaturated carboxylic acids have been used as component $a_3$ and compound (V) contains at least one ethylenically unsaturated double bond and one OH, NH, SH, NCO or epoxy group.

**15.** Copolymer according to one of Claims 1 to 6, characterized in that acetoacetato-containing monomers have been used as component $a_3$.

**16.** Copolymer according to one of Claims 1 to 6, characterized in that amides of α,β-unsaturated carboxylic acids containing alkoxymethyl groups or compounds of the general formula

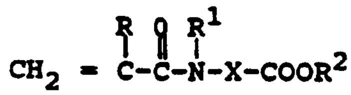

have been used as component $a_3$,
where

| | |
|---|---|
| R | is H, $CH_3$ |
| $R^1$ | is H, alkyl, aryl |
| $R^2$ | is alkyl |

X is 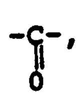, 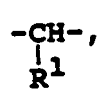, 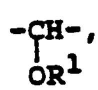, 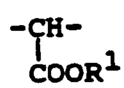

**17.** Copolymer according to Claim 16, characterized in that compound (V) contains at least one ethylenically unsaturated double bond and one OH, NH or SH group.

**18.** Process for the preparation of the copolymer according to any one of Claims 1 to 17 by free-radical solution polymerization, characterized in that

A) monomers $a_1$ to $a_4$ are reacted at temperatures of 130 to 200°C by free-radical solution polymerization to give a copolymer (A), in which

1.) at least 60% by weight of the total amount of component $a_1$ is initially introduced,

2.) components $a_2$ to $a_4$ and any remainder of component $a_1$ are metered in over a monomer addition period which is of the same length for all components in such a manner that

i) the amount of component $a_1$ added per unit of time over the monomer addition period remains constant or decreases,

ii) the amount of components $a_3$ and $a_4$ added per unit of time over the monomer addition period remains constant and

iii) the amount of component $a_2$ added over the first third of the monomer addition period is 15 to 30% by weight of the total amount of component $a_2$, the amount added over the second third is 25 to 40% by weight and the amount added over the last third is 35 to 60% by weight of the total amount of component $a_2$ and

(B) the copolymer obtained in step A is, if desired, reacted with compounds (V) which contain a group which is reactive towards the functional groups of component $a_3$ and contain at least one acidic C-H group or at least one ethylenically unsaturated double bond or at least one epoxy group or at least one

cyclic anhydride group or at least one isocyanate group as crosslinkable groups,

in which the crosslinkable groups have been incorporated in copolymer (C) by using, as component $a_3$, ethylenically unsaturated monomers having at least one acidic C-H group or at least one ethylenically unsaturated double bond or at least one epoxy group or at least one cyclic anhydride group or at least one isocyanate group and/or reacting the copolymer obtained in step A with compounds (V) which contain a group which is reactive towards the functional groups of component $a_3$ and at least one acidic C-H group or ethylenically unsaturated double bond or epoxy group or cyclic hydride group or isocyanate group as crosslinkable groups.

**19.** Process according to Claim 18, characterized in that 100% by weight of the total amount of component $a_1$ is initially introduced.

**20.** Process according to Claim 18 or 19, characterized in that the monomers are polymerized at temperatures of 150 to 180°C.

**21.** Coating agent which contains copolymer (C) containing crosslinkable groups according to any one of Claims 1 to 17 as binder.

**22.** Use of the copolymers (C) containing crosslinkable groups according to any one of Claims 1 to 17 in coating agents for automotive repair coatings.

**23.** Use of the copolymers (C) containing crosslinkable groups according to any one of Claims 1 to 17 as binder in clearcoats or pigmented topcoats.

**Claims for the following Contracting State : ES**

**1.** Process for the preparation of copolymers (C) containing acidic C-H groups or ethylenically unsaturated double bonds or epoxy groups or cyclic anhydride groups or isocyanate groups as crosslinkable groups, which copolymers are based on vinyl esters, vinyl aromatics, ethylenically unsaturated monomers containing at least one functional group and, if desired, further copolymerizable monomers, by free-radical solution polymerization, characterized in that copolymer (C) is a copolymer containing on average 1.25 to 30 crosslinkable groups per molecule and an average molecular weight (number average) of 1500 to 6000 and is prepared by

(A) synthesizing a copolymer by free-radical solution polymerization at temperatures of 130 to 200°C of

$a_1$) 5 to 25% by weight of one or more vinyl esters of monocarboxylic acids,

$a_2$) 10 to 50% by weight of one or more vinyl aromatic hydrocarbons,

$a_3$) 10 to 40% by weight of one or more ethylenically unsaturated monomers containing at least one functional group and

$a_4$) 0 to 40% by weight of other ethylenically unsaturated, copolymerizable monomers, the sum of components $a_1$ to $a_4$ amounting in each case to 100% by weight,

by

1.) initially introducing at least 60% by weight of the total amount of component $a_1$,

2.) metering in components $a_2$ to $a_4$ and any remainder of component $a_1$ over a monomer addition period which is of the same length for all components in such a manner that

i) the amount of component $a_1$ added per unit of time over the monomer addition period remains constant or decreases,

ii) the amount of components $a_3$ and $a_4$ added per unit of time over the monomer addition period remains constant and

iii) the amount of component $a_2$ added over the first third of the monomer addition period is 15 to 30% by weight of the total amount of component $a_2$, the amount added over the second third is 25 to 40% by weight and the amount added over the last third is 35 to 60% by weight of the total amount of component $a_2$ and

(B) the copolymer obtained in step A is, if desired, reacted with compounds (V) which contain a group which is reactive towards the functional groups of component $a_3$ and at least one acidic C-H group or at least one ethylenically unsaturated double bond or at least one epoxy group or at least one cyclic anhydride group or at least one isocyanate group as crosslinkable groups,

in which the crosslinkable groups have been incorporated in copolymer (C) by using, as component $a_3$,

ethylenically unsaturated monomers having at least one acidic C-H group or at least one ethylenically unsaturated double bond or at least one epoxy group or at least one cyclic anhydride group or at least one isocyanate group and/or reacting the copolymer obtained in step A with compounds (V) which contain a group which is reactive towards the functional groups of component $a_3$ and at least one acidic C-H group or ethylenically unsaturated double bond or epoxy group or cyclic hydride group or isocyanate group as crosslinkable groups.

2. Process according to Claim 1, characterized in that the copolymer (C) contains on average 2 to 15 crosslinkable groups per molecule.

3. Process according to Claim 1 or 2, characterized in that the copolymer (C) is prepared by using 10 to 19% by weight of one or more vinyl esters of monocarboxylic acids.

4. Process according to any one of Claims 1 to 3, characterized in that one or more vinyl esters of monocarboxylic acids branched at the $\alpha$ position and having 5 to 15 carbon atoms per molecule are used as component $a_1$.

5. Process according to any one of Claims 1 to 4, characterized in that one or more vinyl esters of saturated aliphatic monocarboxylic acids having 9 to 11 carbon atoms which are branched at the $\alpha$-carbon atom are used as component $a_1$.

6. Process according to any one of Claims 1 to 5, characterized in that the copolymer (C) is prepared by using 15 to 35% by weight of component $a_3$.

7. Process according to any one of Claims 1 to 6, characterized in that hydroxyalkyl esters of ethylenically unsaturated carboxylic acids are used as component $a_3$ and compound (V) is selected from the group comprising ethylenically unsaturated carboxylic acids or the alkyl esters of ethylenically unsaturated carboxylic acids having 1 to 6 carbon atoms in the alkyl radical.

8. Process according to one of Claims 1 to 6, characterized in that hydroxyalkyl esters of ethylenically unsaturated carboxylic acids are used as component $a_3$ and compound (V) has at least one ethylenically unsaturated double bond and one isocyanato group.

9. Process according to any one of Claims 1 to 6, characterized in that hydroxyalkyl esters of ethylenically unsaturated carboxylic acids are used as component $a_3$ and compound (V) is selected from the group comprising amides of $\alpha,\beta$-unsaturated carboxylic acids containing alkoxymethyl groups or from the compounds having the general formula

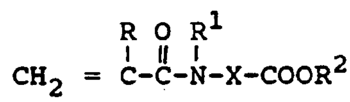

where

| | |
|---|---|
| R | is H, $CH_3$ |
| $R^1$ | is H, alkyl, aryl |
| $R^2$ | is alkyl |

X is 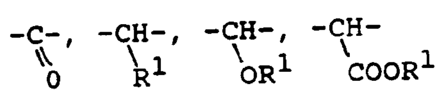

10. Process according to any one of Claims 1 to 6, characterized in that hydroxyalkyl esters of ethylenically unsaturated carboxylic acids are used as component $a_3$ and compound (V) contains a COOH or alkyl ester group having 1 to 6 carbon atoms in the alkyl radical and at least one active hydrogen atom.

11. Process according to any one of Claims 1 to 6, characterized in that epoxy-containing ethylenically unsaturated monomers are used as component $a_3$ and compound (V) contains at least one ethylenically unsaturated double bond and one carboxyl or amino group.

12. Process according to any one of Claims 1 to 6, characterized in that isocyanato-containing ethylenically unsaturated monomers are used as component $a_3$ and compound (V) contains at least one ethylenically unsaturated double bond and one OH, NH, SH or COOH group.

13. Process according to any one of Claims 1 to 6, characterized in that alkyl esters or aminoalkyl esters of ethylenically unsaturated carboxylic acids having 1 to 6 carbon atoms in the alkyl radical are used as component $a_3$ and compound (V) contains at least one ethylenically unsaturated double bond and one OH, NH or SH group.

14. Process according to any one of Claims 1 to 6, characterized in that ethylenically unsaturated carboxylic acids are used as component $a_3$ and compound (V) contains at least one ethylenically unsaturated double bond and one OH, NH, SH, NCO or epoxy group.

15. Process according to any one of Claims 1 to 6, characterized in that acetoacetato-containing monomers are used as component $a_3$.

16. Process according to any one of claims 1 to 6, characterized in that amides of α,β-unsaturated carboxylic acids containing alkoxymethyl groups or compounds of the general formula

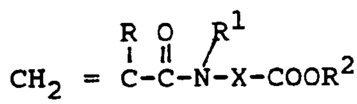

are used as component $a_3$,
where

| | |
|---|---|
| R | is H, $CH_3$ |
| $R^1$ | is H, alkyl, aryl |
| $R^2$ | is alkyl |

X is 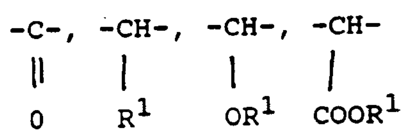

17. Process according to claim 16, characterized in that compound (V) contains at least one ethylenically unsaturated double bond and one OH, NH or SH group.

18. Process according to any one of Claims 1 to 17, characterized in that 100% by weight of the total amount of component $a_1$ is initially introduced.

19. Process according to any one of Claims 1 to 18, characterized in that the monomers are polymerized at temperatures of 150 to 180°C.

20. Process for the preparation of coating agents, characterized in that the coating agents contain the copolymer (C) containing crosslinkable groups prepared by a process according to any one of Claims 1 to 19 as binder.

21. Use of the copolymers (C) containing crosslinkable groups prepared by a process according to any one of Claims 1 to 19 in coating agents for automotive repair coatings.

22. Use of the copolymer (C) containing crosslinkable groups prepared by a process according to any one of Claims 1 to 19 as binder in clearcoats or pigmented topcoats.

## Revendications

### Revendications pour les Etats contractants suivants : AT, BE, CH, DE, DK, FR, GB, GR, IT, LU, NL, SE

**1.** Copolymère (C) susceptible d'être préparé au moyen d'une polymérisation radicalaire en solution avec des radicaux à CH acide ou des doubles liaisons éthyléniquement insaturées ou des radicaux époxyde ou des radicaux anhydride cyclique ou des radicaux isocyanate comme radicaux réticulables sur base de monomères ester vinylique, vinylaromatiques, éthyléniquement insaturés avec au moins un radical fonctionnel et facultativement un autre monomère susceptible d'être copolymérisé, caractérisé en ce que le copolymère (C) présente une teneur de en moyenne 1,25 à 30 radicaux réticulables par molécule et un poids moléculaire moyen (moyenne numérique) de 1500 à 6000 et est susceptible d'être préparé :

A) par polymérisation radicalaire en solution à des températures de 130 à 200°C de :

$a_1$) 5 à 25% en poids d'un ou de plusieurs esters vinyliques d'acides monocarboxyliques;

$a_2$) 10 à 50% en poids d'un ou de plusieurs hydrocarbures vinylaromatiques;

$a_3$) 10 à 40% en poids d'un ou de plusieurs monomères éthyléniquement insaturés avec au moins un radical fonctionnel, et

$a_4$) 0 à 40% en poids d'un autre monomère éthyléniquement insaturé, susceptible d'être copolymérisé, où la somme des composants $a_1$ à $a_4$ atteint à chaque fois 100% en poids;

un copolymère est synthétisé, attendu que :

1.) au moins 60% en poids de la quantité totale du composant $a_1$ sont introduits préalablement;

2.) les composants $a_2$ à $a_4$ et le reste éventuellement présent de composant $a_1$ sont ajoutés dans un intervalle de temps d'addition des monomères de longueur identique pour tous les composants, de sorte que :

i) la quantité de composant $a_1$ ajoutée par unité de temps dans l'intervalle de temps d'addition des monomères reste constante ou diminue;

ii) la quantité des composants $a_3$ et $a_4$ ajoutée par unité de temps dans l'intervalle de temps d'addition des monomères reste constante, et

iii) la quantité de composant $a_2$ ajoutée pendant le premier tiers de l'intervalle de temps d'addition des monomères atteint 15 à 30% en poids de la quantité totale de composant $a_2$, 25 a 40% en poids pendant le deuxième tiers et 35 à 60% en poids de la quantité totale du composant $a_2$ pendant le dernier tiers, et

B) le copolymère obtenu dans l'étape A est mis à réagir facultativement avec un composé (V), qui contient un radical réactif avec les radicaux réactifs du composant $a_3$ et au moins un radical à CH acide ou au moins une double liaison éthyléniquement insaturée ou au moins un radical époxyde ou au moins un radical anhydride cyclique ou au moins un radical isocyanate comme radicaux réticulables;

où les radicaux réticulables sont introduits dans le copolymère (C) par le fait qu'un monomère éthyléniquement insaturé $a_3$ avec au moins un radical à CH acide ou au moins une double liaison éthyléniquement insaturée ou au moins un radical époxyde ou au moins un radical anhydride cyclique ou au moins un radical isocyanate est introduit comme composant a3 et/ou par le fait que le copolymère obtenu à l'étape A est mis à réagir avec un composé (V), qui contient un radical réactif avec les radicaux fonctionnels du composant $a_3$ et au moins un radical à CH acide ou une double liaison éthyléniquement insaturée ou un radical époxyde ou un radical anhydride cyclique ou un radical isocyanate comme radical réticulable.

**2.** Copolymère suivant la revendication 1, caractérisé en ce qu'il présente une teneur de en moyenne 2 à 15 radicaux réticulables par molécule.

**3.** Copolymère suivant la revendication 1 ou 2, caractérisé en ce qu'il est susceptible d'être préparé par utilisation de 10 à 19% en poids d'un ou de plusieurs ester vinyliques d'acides monocarboxyliques.

**4.** Copolymère suivant l'une quelconque des revendications 1 à 3, caractérisé en ce qu'un ou plusieurs esters vinyliques d'acides monocarboxyliques branchés en position a avec 5 à 15 atomes de carbone par molécule sont utilisés comme composant $a_1$.

**5.** Copolymère suivant l'une quelconque des revendications 1 à 4, caractérisé en ce qu'un ou plusieurs esters vinyliques d'acides monocarboxyliques aliphatiques saturés avec 9 à 11 atomes de carbone, qui sont branchés sur l'atome de carbone $\alpha$, sont utilisés comme composant $a_1$.

6. Copolymère suivant l'une quelconque des revendications 1 à 5, caractérisé en ce qu'il peut être préparé par utilisation de 15 à 35% en poids de composant $a_3$.

7. Copolymère suivant l'une quelconque des revendications 1 à 6, caractérisé en ce qu'un ester hydroxyalcoyle d'acides carboxyliques éthyléniquement insaturés est utilisé comme composant $a_3$ et le composé (V) est choisi parmi le groupe des acides carboxyliques éthyléniquement insaturés ou des esters alcoyle d'acides carboxyliques éthyléniquement insaturés avec 1 à 6 atomes de carbone dans le reste alcoyle.

8. Copolymère suivant l'une quelconque des revendications 1 à 6, caractérisé en ce qu'un ester hydroxyalcoyle d'acides carboxyliques éthyléniquement insaturés est utilisé comme composant $a_3$ et le composé (V) présente au moins une double liaison éthyléniquement insaturée et un radical isocyanate.

9. Copolymère suivant l'une quelconque des revendications 1 à 6, caractérisé en ce qu'un ester hydroxyalcoyle d'acides carboxyliques éthyléniquement insaturés est utilisé comme composant $a_3$ et que le composé (V) est choisi parmi le groupe des amides contenant des radicaux alcoxyméthyle d'acides carboxyliques $\alpha,\beta$-insaturés ou les composés de formule générale :

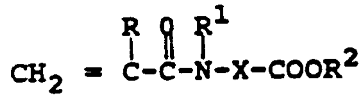

avec :

R = H, $CH_3$;
$R^1$ = H, alcoyle, aryle;
$R^2$ = alcoyle, et

X = 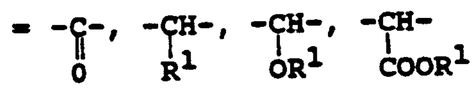

10. Copolymère suivant l'une quelconque des revendications 1 à 6, caractérisé en ce qu'un ester hydroxyalcoyle d'acides carboxyliques éthyléniquement insaturés est utilisé comme composant $a_3$ et que le composé (V) contient un radical COOH- ou un ester d'alcoyle avec 1 à 6 atomes de carbone dans le reste alcoyle et au moins un atome d'hydrogène actif.

11. Copolymère suivant l'une quelconque des revendications 1 à 6, caractérisé en ce que des monomères éthyléniquement insaturés contenant des radicaux époxyde sont utilisés comme composant $a_3$ et le composé (V) présente au moins une double liaison éthyléniquement insaturée et un radical carboxyle ou amino.

12. Copolymère suivant l'une quelconque des revendications 1 à 6, caractérisé en ce que des monomères éthyléniquement insaturés comprenant des radicaux isocyanate sont utilisés comme composant $a_3$ et le composé (V) contient au moins une double liaison éthyléniquement insaturée et un radical OH-, NH-, SH- ou COOH-.

13. Copolymère suivant l'une quelconque des revendications 1 à 6, caractérisé en ce que des esters alcoyle ou aminoalcoyle d'acides carboxyliques éthyléniquement insaturés avec 1 à 6 atomes de carbone dans le reste alcoyle sont utilisés comme composant $a_3$ et le composé (V) contient au moins une double liaison éthyléniquement insaturée et un radical OH-, NH- ou SH-.

14. Copolymère suivant l'une quelconque des revendications 1 à 6, caractérisé en ce que des acides carboxyliques éthyléniquement insaturés sont utilisés comme composant $a_3$ et le composé (V) contient au moins une double liaison éthyléniquement insaturée et un radical OH-, NH-, SH- NCO- ou époxyde.

15. Copolymère suivant l'une quelconque des revendications 1 à 6, caractérisé en ce que des monomères contenant des radicaux acétoacétate sont utilisés comme composant $a_3$.

**16.** Copolymère suivant l'une quelconque des revendications 1 à 6, caractérisé en ce que des amides d'acides carboxyliques α,β-insaturés contenant des radicaux alcoxyméthyle ou des composés de formule générale :

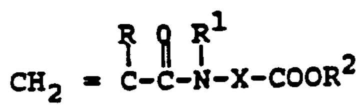

sont utilisés comme composant $a_3$ avec :

R = H, $CH_3$;
$R^1$ = H, alcoyle, aryle;
$R^2$ = alcoyle, et

X = 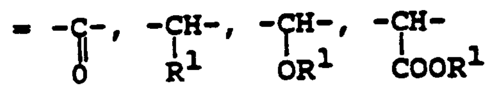

**17.** Copolymère suivant la revendication 16, caractérisé en ce que le composé (V) contient au moins une double liaison éthyléniquement insaturée et un radical OH-, NH- ou SH-.

**18.** Procédé de préparation d'un copolymère suivant l'une quelconque des revendications 1 à 17, au moyen d'une polymérisation radicalaire en solution, caractérisé en ce que :

A) les monomères $a_1$ à $a_4$ sont traités à une température de 130 à 200°C par polymérisation radicalaire en solution pour former un copolymère (A), où

1.) au moins 60% en poids de la quantité totale du composant $a_1$ est ajouté, et

2.) les composants $a_2$ à $a_4$ et facultativement le reste de composant $a_1$ sont ajoutés en un intervalle de temps d'addition des monomères de longueur identique pour tous les composants, tel que :

i) la quantité ajoutée par unité de temps du composant $a_1$ reste constante ou diminue dans l'intervalle de temps d'addition des monomères;

ii) la quantité ajoutée par unité de temps des composants $a_3$ et $a_4$ reste constante dans l'intervalle de temps d'addition des monomères, et

iii) la quantité ajoutée de composant $a_2$ dans le premier tiers de l'intervalle de temps d'addition des monomères atteint 15 à 30% en poids de la quantité totale de composant $a_2$, 25 à 40% en poids pendant le deuxième tiers et 35 à 60% en poids de la quantité totale du composant $a_2$ pendant le troisième tiers, et

B) le copolymère obtenu à l'étape A est mis à réagir facultativement avec un composé (V), qui contient des radicaux réactifs vis-à-vis des radicaux réactifs du composant $a_3$ et au moins un radical à CH acide ou au moins une double liaison éthyléniquement insaturée ou au moins un radical époxyde ou au moins un radical anhydride cyclique ou au moins un radical isocyanate comme radical réticulable;

où les radicaux réticulables sont introduits dans le copolymère (C) par le monomère éthyléniquement insaturé comme composant $a_3$ avec au moins un radical à CH acide ou au moins une double liaison éthyléniquement insaturée ou au moins un radical époxyde ou au moins un radical anhydride cyclique ou au moins un radical isocyanate et/ou le copolymère obtenu à l'étape A est mis à réagir avec un composé (V), qui contient un radical réactif avec les radicaux fonctionnels du composant $a_3$ et au moins un radical à CH acide ou une double liaison éthyléniquement insaturée ou un radical époxyde ou un radical anhydride cyclique ou un radical isocyanate comme radical réticulable.

**19.** Procédé suivant la revendication 18, caractérisé en ce que 100% de la quantité totale du composant $a_1$ sont introduits.

**20.** Procédé suivant la revendication 18 ou 19, caractérisé en ce que les monomères sont polymérisés à des températures de 150 à 180°C.

**21.** Composition d'enduction, caractérisée en ce qu'elle contient le copolymère (C) contenant les radicaux réticulables suivant l'une quelconque des revendications 1 à 17 comme agent de liant.

22. Utilisation du copolymère (C) contenant des radicaux réticulables suivant l'une quelconque des revendications 1 à 17, dans une composition d'enduction pour un vernis de réparation d'automobile.

23. Utilisation du copolymère (C) contenant des radicaux réticulables suivant l'une quelconque des revendications 1 à 17, comme agent liant dans des laques transparentes ou des laques de revêtement pigmentées.

**Revendications pour l'Etat contractant suivant : ES**

1. Procédé de préparation de copolymère (C) avec des radicaux à CH acide ou des doubles liaisons éthyléniquement insaturées ou des radicaux époxyde ou des radicaux anhydride cyclique ou des radicaux isocyanates comme radicaux réticulables sur base de monomères ester vinyliques, vinylaromatiques, éthyléniquement insaturés avec au moins un radical fonctionnel et facultativement un autre monomère susceptible d'être copolymérisé au moyen d'une polymérisation radicalaire en solution, caractérisé en ce que le copolymère (C) présente une teneur de en moyenne 1,25 à 30 radicaux réticulables par molécule et un poids moléculaire moyen (moyenne numérique) de 1500 à 6000 et est préparé par :
A) par polymérisation radicalaire en solution à des températures de 130 à 200°C de :
$a_1$) 5 à 25% en poids d'un ou de plusieurs esters vinyliques d'acides monocarboxyliques;
$a_2$) 10 à 50% en poids d'un ou de plusieurs hydrocarbures vinylaromatiques;
$a_3$) 10 à 40% en poids d'un ou de plusieurs monomères éthyléniquement insaturés avec au moins un radical fonctionnel, et
$a_4$) 0 à 40% en poids d'un autre monomère éthyléniquement insaturé, susceptible d'être copolymérisé, où la somme des composants $a_1$ à $a_4$ atteint à chaque fois 100% en poids;
un copolymère est synthétisé, attendu que :
1.) au moins 60% en poids de la quantité totale du composant $a_1$ sont introduits préalablement;
2.) les composants $a_2$ à $a_4$ et le reste éventuellement de composant $a_1$ sont ajoutés dans un intervalle de temps d'addition des monomères de longueur identique pour tous les composants, de sorte que :
i) la quantité de composant $a_1$ ajoutée par unité de temps dans l'intervalle de temps d'addition des monomères reste constante ou diminue;
ii) la quantité des composants $a_3$ et $a_4$ ajoutée par unité de temps dans l'intervalle de temps d'addition des monomères reste constante, et
iii) la quantité de composant $a_2$ ajoutée pendant le premier tiers de l'intervalle de temps d'addition des monomères atteint 15 à 30% en poids de la quantité totale de composant $a_2$, 25 à 40% en poids pendant le deuxième tiers et 35 à 60% en poids de la quantité totale du composant $a_2$ pendant le dernier tiers, et
B) le copolymère obtenu dans l'étape A est mis à réagir facultativement avec un composé (V), qui contient un radical réactif avec les radicaux réactifs du composant $a_3$ et au moins un radical à CH acide ou au moins une double liaison éthyléniquement insaturée ou au moins un radical époxyde ou au moins un radical anhydride cyclique ou au moins un radical isocyanate comme radicaux réticulables;
où les radicaux réticulables sont introduits dans le copolymère (C) par le fait qu'un monomère éthyléniquement insaturé avec au moins un radical à CH acide ou au moins une double liaison éthyléniquement insaturée ou au moins un radical époxyde ou au moins un radical anhydride cyclique ou au moins un radical isocyanate est introduit comme composant $a_3$ et/ou par le fait que le copolymère obtenu à l'étape A est mis à réagir avec un composé (V), qui contient un radical réactif avec les radicaux fonctionnels du composant $a_3$ et au moins un radical à CH acide ou une double liaison éthyléniquement insaturée ou un radical époxyde ou un radical anhydride cyclique ou un radical isocyanate comme radical réticulable.

2. Procédé suivant la revendication 1, caractérisé en ce que le copolymère (C) présente une teneur de en moyenne 2 à 15 radicaux réticulables par molécule.

3. Procédé suivant la revendication 1 ou 2, caractérisé en ce que le copolymère (C) est préparé par utilisation de 10 à 19% en poids d'un ou de plusieurs esters vinyliques d'acides monocarboxyliques.

4. Procédé suivant l'une quelconque des revendications 1 à 3, caractérisé en ce qu'un ou plusieurs esters vinyliques d'acides monocarboxyliques branchés en position $\alpha$ avec 5 à 15 atomes de carbone par molécule sont utilisés comme composant $a_1$.

5. Procédé suivant l'une quelconque des revendications 1 à 4, caractérisé en ce qu'un ou plusieurs esters vinyliques d'acides monocarboxyliques aliphatiques saturés avec 9 à 11 atomes de carbone, qui sont branchés sur l'atome de carbone a, sont utilisés comme composant $a_1$.

6. Procédé suivant l'une quelconque des revendications 1 à 5, caractérisé en ce que le copolymère (C) est préparé par utilisation de 15 à 35% en poids de composant $a_3$.

7. Procédé suivant l'une quelconque des revendications 1 à 6, caractérisé en ce qu'un ester hydroxyalcoyle d'acides carboxyliques éthyléniquement insaturés est utilisé comme composant $a_3$ et le composé (V) est choisi parmi le groupe des acides carboxyliques éthyléniquement insaturés ou des esters alcoyle d'acides carboxyliques éthyléniquement insaturés avec 1 à 6 atomes de carbone dans le reste alcoyle.

8. Procédé suivant l'une quelconque des revendications 1 à 6, caractérisé en ce qu'un ester hydroxyalcoyle d'acides carboxyliques éthyléniquement insaturés est utilisé comme composant $a_3$ et le composé (V) présente au moins une double liaison éthyléniquement insaturée et un radical isocyanate.

9. Procédé suivant l'une quelconque des revendications 1 à 6, caractérisé en ce qu'un ester hydroxyalcoyle d'acides carboxyliques éthyléniquement insaturés est utilisé comme composant $a_3$ et que le composé (V) est choisi parmi le groupe des amides contenant des radicaux alcoxyméthyle d'acides carboxyliques $\alpha,\beta$-insaturés ou les composés de formule générale :

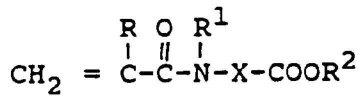

avec :

| | |
|---|---|
| R | = H, $CH_3$; |
| $R^1$ | = H, alcoyle, aryle; |
| $R^2$ | = alcoyle, et |

X =

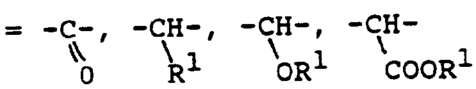

10. Procédé suivant l'une quelconque des revendications 1 à 6, caractérisé en ce qu'un ester hydroxyalcoyle d'acides carboxyliques éthyléniquement insaturés est utilisé comme composant $a_3$ et que le composé (V) contient un radical COOH- ou ester d'alcoyle avec 1 à 6 atomes de carbone dans le reste alcoyle et au moins un atome d'hydrogène actif.

11. Procédé suivant l'une quelconque des revendications 1 à 6, caractérisé en ce que des monomères éthyléniquement insaturés contenant des radicaux époxyde sont utilisés comme composant $a_3$ et le composé (V) présente au moins une double liaison éthyléniquement insaturée et un radical carboxyle ou amino.

12. Procédé suivant l'une quelconque des revendications 1 à 6, caractérisé en ce que des monomères éthyléniquement insaturés comprenant des radicaux isocyanate sont utilisés comme composant $a_3$ et le composé (V) contient au moins une double liaison éthyléniquement insaturée et un radical OH-, NH-, SH- ou COOH-.

13. Procédé suivant l'une quelconque des revendications 1 à 6, caractérisé en ce que des esters d'alcoyle ou aminoalcoyle d'acides carboxyliques éthyléniquement insaturés avec 1 à 6 atomes de carbone dans le reste alcoyle sont utilisés comme composant $a_3$ et le composé (V) contient au moins une double liaison éthyléniquement insaturée et un radical OH-, NH- ou SH-.

14. Procédé suivant l'une quelconque des revendications 1 à 6, caractérisé en ce que des acides carboxyliques éthyléniquement insaturés sont utilisés comme composant $a_3$ et le composé (V) contient au moins une double liaison éthyléniquement insaturée et un radical OH-, NH-, SH- NCO- ou époxyde.

**15.** Procédé suivant l'une quelconque des revendications 1 à 6, caractérisé en ce que des monomères contenant des radicaux acétoacétate sont utilisés comme composant $a_3$.

**16.** Procédé suivant l'une quelconque des revendications 1 à 6, caractérisé en ce que des amides d'acides carboxyliques $\alpha,\beta$-insaturés contenant des radicaux alcoxyméthyle ou des composés de formule générale :

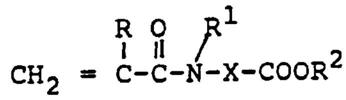

sont utilisés comme composant $a_3$ avec :

R = H, $CH_3$;
$R^1$ = H, alcoyle, aryle;
$R^2$ = alcoyle, et

X = 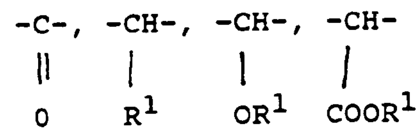

**17.** Procédé suivant la revendication 16, caractérisé en ce que le composé (V) contient au moins une double liaison éthyléniquement insaturée et un radical OH-, NH- ou SH-.

**18.** Procédé suivant l'une quelconque des revendications 1 à 17, caractérisé en ce que 100% en poids de la quantité totale du composant $a_1$ sont ajoutés.

**19.** Procédé suivant l'une quelconque des revendications 1 à 18, caractérisé en ce que les monomères sont polymérisés à des températures de 150 à 180°C.

**20.** Procédé de préparation de composition d'enduction, caractérisé en ce que la composition d'enduction contient un copolymère (C) contenant les radicaux réticulables préparés par un procédé suivant l'une quelconque des revendications 1 à 19, comme agent liant.

**21.** Utilisation d'un copolymère (C) contenant des radicaux réticulables, préparé par un procédé suivant l'une quelconque des revendications 1 à 19, dans une composition d'enduction pour un vernis de réparation d'automobile.

**22.** Utilisation d'un copolymère (C) contenant des radicaux réticulables, préparé par un procédé suivant l'une quelconque des revendications 1 à 19, comme agent liant dans des laques transparentes ou des laques de revêtement pigmentées.